(19) Europäisches Patentamt

European Patent Office

Office européen des brevets

(11) **EP 1 721 665 A1**

(12) **EUROPÄISCHE PATENTANMELDUNG**

(43) Veröffentlichungstag:
   **15.11.2006 Patentblatt 2006/46**

(51) Int Cl.:
   ***B01J 23/62*** (2006.01)    ***B01J 29/06*** (2006.01)
   ***B01D 53/94*** (2006.01)

(21) Anmeldenummer: **05010515.4**

(22) Anmeldetag: **13.05.2005**

(84) Benannte Vertragsstaaten:
   **AT BE BG CH CY CZ DE DK EE ES FI FR GB GR HU IE IS IT LI LT LU MC NL PL PT RO SE SI SK TR**
   Benannte Erstreckungsstaaten:
   **AL BA HR LV MK YU**

(71) Anmelder: **HTE Aktiengesellschaft The High Throughput Experimentation Company**
   **69123 Heidelberg (DE)**

(72) Erfinder:
   • **Strehlau, Wolfgang**
    **69221 Dossenheim (DE)**

• **Gerlach, Olga**
 **67071 Ludwigshafen (DE)**
• **Maier, Jürgen**
 **68305 Mannheim (DE)**
• **Gabriel, Tamara**
 **76646 Bruchsal (DE)**

(74) Vertreter: **Jones Day**
   **Rechtsanwälte, Attorneys-at-Law, Patentanwälte**
   **Prinzregentenstrasse 11**
   **80538 München (DE)**

(54) **Katalysator zur Abgasbehandlung und Verfahren zu seiner Herstellung**

(57)   Katalysator, dadurch gekennzeichnet, dass er eine Zusammensetzung umfassend Palladium, Zinnoxid und ein Trägeroxid und gegebenenfalls einen Promotor und einen mit einer Dotiersubstanz dotierten Zeolith enthält, Verfahren zu seiner Herstellung, seine Verwendung zur Entfernung von Schadstoffen aus mageren Verbrennungsmotoren und Ablüften sowie Verfahren zur Entfernung von Schadstoffen aus Abgasen von mageren Verbrennungsmotoren unter Verwendung des Katalysators durch Oxidieren von Kohlenmonoxid und Kohlenwasserstoffen unter gleichzeitigem Entfernen von Rußpartikeln durch Oxidation.

EP 1 721 665 A1

**Beschreibung**

Die vorliegende Erfindung betrifft einen Katalysator zur simultanen Entfernung von Kohlenmonoxid und Kohlenwasserstoffen aus sauerstoffreichen Abgasen, beispielsweise aus den Abgasen von Dieselmotoren, mageren Otto-Motoren und stationären Quellen. Der Katalysator enthält eine Zusammensetzung umfassend Palladium, Zinnoxid und ein Trägeroxid und einen mit einer Dotiersubstanz dotierten Zeolith. Es können auch Promotoren und undotierte Zeolithe enthalten sein. Die Erfindung betrifft auch ein Verfahren zur Herstellung des Katalysators sowie ein Verfahren zur Abgasreinigung unter Verwendung des Katalysators. Der Katalysator besitzt eine hohe Konvertierungsleistung für Kohlenmonoxid und Kohlenwasserstoffe, eine hohe thermische Stabilität und eine gute Schwefelresistenz.

Die wesentlichen Schadstoffe aus dem Abgas von Dieselmotoren sind Kohlenmonoxid (CO), unverbrannte Kohlenwasserstoffe (HC), wie Paraffine, Olefine, Aldehyde, Aromaten, sowie Stickoxide ($NO_x$), Schwefeldioxid ($SO_2$) und Rußpartikel, die den Kohlenstoff sowohl als Feststoff als auch in Form der sogenannten "volatile organic fraction" (VOF) enthalten. Ferner ist im Dieselabgas auch Sauerstoff in einer Konzentration vorhanden, die je nach Betriebspunkt etwa zwischen 1,5 und 15 % liegt.

Die Schadstoffe, die aus mageren Otto-Motoren emittiert werden, beispielsweise aus direkt einspritzenden Otto-Motoren, bestehen im Wesentlichen aus CO, HC, $NO_x$ und $SO_2$. Der Sauerstoff liegt gegenüber CO und HC in stöchiometrischem Überschuß vor.

Dieselmotoren und magere Otto-Motoren werden im Folgenden auch als "magere Verbrennungsmotoren" bezeichnet.

Industrielle Ablüfte sowie Abgase aus Hausbrand können ebenfalls unverbrannte Kohlenwasserstoffe und Kohlenmonoxid enthalten.

Unter dem Begriff "sauerstoffreiches Abgas" wird ein Abgas verstanden, bei dem der Sauerstoff in stöchiometrischem Überschuß gegenüber den oxidierbaren Schadstoffen wie CO und HC vorliegt.

Zur Entfernung von Schadstoffen aus diesen Abgasen werden Oxidationskatalysatoren eingesetzt. Sie haben die Aufgabe, Kohlenmonoxid sowie Kohlenwasserstoffe durch Oxidation zu entfernen, wobei im Idealfall Wasser und Kohlendioxid entstehen. Zusätzlich kann auch Ruß durch Oxidation entfernt werden, wobei gleichfalls Wasser und Kohlendioxid gebildet werden.

Die technisch verwendeten Katalysatoren enthalten in der Regel Platin als Aktivkomponente. Die Vorteile und Nachteile solcher Katalysatoren werden nachfolgend kurz diskutiert.

So offenbart die EP 1 129 764 A1 einen Oxidationskatalysator, der wenigstens einen Zeolith und zusätzlich eines der Trägeroxide Aluminiumoxid, Siliziumoxid, Titanoxid und Aluminiumsilikat und eines der Edelmetalle Pt, Pd, Rh, Ir, Au und Ag enthält, wobei die mittlere Partikelgröße der Edelmetalle zwischen 1 und 6 nm beträgt. Die Ausführungsbeispiele beziehen sich zudem ausschließlich auf Katalysatoren mit Platin als alleinigem Edelmetall.

Die US 6,132,694 offenbart einen Katalysator für die Oxidation von flüchtigen Kohlenwasserstoffen, der aus einem Edelmetall, wie Pt, Pd, Au, Ag und Rh, und einem Metalloxid, das mehr als eine stabile Oxidationsstufe besitzt und wenigstens Zinnoxid einschließt, besteht. Das Metalloxid kann mit kleinen Mengen an Oxiden der Übergangsmetalle dotiert sein. Weitere Oxide werden nicht genannt. Der Katalysator wird so hergestellt, dass vorzugsweise ein monolithischer Körper mit mehreren Schichten Zinnoxid beladen wird. Auf das Zinnoxid wird dann das Edelmetall aufgebracht. Gemäß der Beispiele werden besonders gute Resultate erzielt, wenn das Edelmetall Platin und das Oxid mit mehr als einer stabilen Oxidationsstufe Zinnoxid ist. Die Verwendung eines Trägeroxids ist nicht vorgesehen.

Neben der Oxidation von CO und HC wird auch die Bildung von $NO_2$ aus NO und Sauerstoff durch Platin promotiert. Dies kann je nach Gesamtfunktionalität des Oxidationskatalysators vor- oder nachteilhaft sein.

In Verbindung mit Rußfiltern kann die Bildung von $NO_2$ am Dieseloxidationskatalysator erwünscht sein, da das $NO_2$ zum Rußabbau, d.h. zu dessen Oxidation zu Kohlendioxid und Wasser, beiträgt. Eine solche Kombination von Dieseloxidationskatalysator und Rußpartikelfilter wird auch als CRT-System (<u>c</u>ontinuously <u>r</u>egenerating <u>t</u>rap) bezeichnet und ist beispielsweise in den Patentschriften EP 835 684 und US 6,516,611 offenbart.

Ohne die Verwendung von Rußfiltern im Abgasstrang ist die $NO_2$-Bildung unerwünscht, da emittiertes $NO_2$ zu einer starken Geruchsbelästigung führt.

Aufgrund der chemischen und physikalischen Eigenschaften des Platins zeigen die Platin-haltigen Katalysatoren erhebliche Schwächen nach hoher thermischer Beanspruchung.

Die Abgastemperaturen leistungsfähiger und häufig mit Turboladern ausgestatteter Dieselmotoren liegen überwiegend in einem Temperaturbereich zwischen 100 und 350 °C, wobei gesetzliche Regelungen durch NED-cycles (new European driving cycle) für die Betriebspunkte von Kraftfahrzeugen vorgegeben sind. Während des Teillastbetriebs liegen die Abgastemperaturen im Bereich zwischen 120 und 250 °C. Während des Volllastbetriebs erreichen die Temperaturen maximal 650 bis 700 °C. Dies erfordert von den Oxidationskatalysatoren auf der einen Seite niedrige Anspringtemperaturen ($T_{50}$-Wert), auf der anderen Seite eine hohe thermische Stabilität, um einen drastischen Aktivitätsverlust durch Alterung während des Volllastbetriebs zu vermeiden. Ferner ist anzumerken, dass sich unverbrannte Kohlenwasserstoffe auf dem Katalysator akkumulieren und dort zünden können, so dass lokale Katalysatortemperaturen auch weit oberhalb von 700 °C liegen können. So können Temperaturspitzen von bis zu 1000 °C erreicht werden. Diese Temperaturspitzen können zu einer Schädigung von Oxidationskatalysatoren führen. Dann wird insbesondere im Tieftemperaturbereich keine nennenswerte Schadstoffkonvertierung durch Oxidation mehr erreicht.

Die Konzentrationen an Kohlenwasserstoffen in den Abgasen von Dieselmotoren liegen typischerweise in einem Bereich von 100 - 2000 ppm, wobei diese Angabe auf C1 bezogen ist. Nähere Angaben können beispielsweise aus folgendem Übersichtsartikel entnommen werden: Grigorius C. Koltsakis, Anastasios M. Stamatelos in Prog. Energy Combust. Sci. Vol. 23, pp. 1 - 39 (1997) Elsevier Science Ltd.

In der EP0781592B1 wird ein Reduktionsreinigungsverfahren für ein Stickoxidhaltiges Abgas beansprucht, das in Gegenwart eines Reduktionsmittels durchgeführt wird. Bei dem hierbei verwendeten Reduktionsmittel kann es sich um einen Kohlenwasserstoff oder auch eine sauerstoffhaltige organische Verbindung halten. Der für das $NO_x$-Reduktionsverfahren eingesetzte Katalysator weist die Komponenten Aluminiumoxid und Zinn in Verbindung mit Metallspezies auf, die aus der Gruppe Palladium, Rhodium, Ruthenium oder Indium bestehen können. Bei dem in der EP0781592B1 beschriebenen Verfahren sind die sogenannten HC-SCR-Eigenschaften des Katalysators von zentraler Bedeutung. Das Verfahren betrifft die Behandlung von Abgasen mit einem Kohlenwasserstoffgehalt, der wesentlich höher ist als der Kohlenwasserstoffgehalt wie er einem typischen Dieselabgas entspricht.

Ferner wurden auch verschiedene Rußfilter für die Verminderung der Partikelemission aus dem Dieselabgas entwickelt, die beispielsweise in den Patentschriften WO 02/26379 A1 und US 6,516,611 B1 beschrieben sind. Beim Abbrand des auf den Partikelfiltern akkumulierten Rußes kann Kohlenmonoxid freigesetzt werden, welches mittels katalytisch aktiver Rußfilterbeschichtungen zu Kohlendioxid umgesetzt werden kann. Entsprechende Beschichtungen können ebenfalls als Oxidationskatalysatoren bezeichnet werden. Zur Umwandlung des Rußes in unschädliches $CO_2$ und Wasser kann der angesammelte Ruß in Intervallen abgebrannt werden, wobei die notwendigen Rußabbrandtemperaturen beispielsweise durch motorinterne Maßnahmen erzeugt werden können. Der Rußabbrand ist jedoch mit einer hohen Wärmefreisetzung verbunden, die zu einer Deaktivierung der auf die Filter aufgebrachten Platin-haltigen Oxidationskatalysatoren führen kann.

Zur Kompensation von thermischen Schädigungen sind Platin-haltige Oxidationskatalysatoren für Abgase aus Diesel-Pkw deshalb meist mit sehr hohen Platingehalten ausgestattet. Sie liegen typischerweise im Bereich von 2,1 - 4,6 g/L (60 - 130 g/ft$^3$). Beispielsweise werden in einem 2-Liter-Katalysator bis zu 9 g Platin eingesetzt. Die Verwendung hoher Platinmengen ist ein wesentlicher Kostenfaktor bei der Abgasnachbehandlung von Dieselfahrzeugen. Eine Reduzierung des Platinanteils im Katalysator ist von großem wirtschaftlichem Interesse.

Im Zusammenhang mit der Einführung der Dieselpartikelfilter zeichnen sich neben einer niedrigen Anspringtemperatur und der geforderten hohen thermischen Stabilität weitere Anforderungen an Oxidationskatalysatoren ab, die nachstehend geschildert werden.

Beispielsweise kann man dem Dieselpartikelfilter einen Oxidationskatalysator vorschalten. Es ist dann möglich, die Kohlenwasserstoffkonzentrationen am Oxidationskatalysator zu erhöhen und die bei der Verbrennung der Kohlenwasserstoffe frei werdende Wärme zu nutzen, um den Rußabbrand auf dem dahinter liegenden Dieselpartikelfilter zu initiieren. Alternativ oder auch zusätzlich kann der Dieselpartikelfilter selbst mit Oxidationskatalysator beschichtet werden. Die zusätzliche Beschichtung des Dieselpartikelfilters hat dabei die Aufgabe, das beim Rußabbrand freigesetzte Kohlenmonoxid zu Kohlendioxid zu oxidieren. Bei hoher thermischer Stabilität bei gleichzeitig hoher Aktivität einer solchen Beschichtung könnte auf den vorgeschalteten zusätzlichen Oxidationskatalysator in einigen Anwendungen ganz verzichtet werden. Beide der hier im Zusammenhang mit den Dieselpartikelfiltern diskutierten Funktionalitäten von Oxidationskatalysatoren erfordern eine hohe thermische Stabilität der Katalysatoren, wobei Platin-haltige Katalysatoren aus den vorstehend erwähnten Gründen Nachteile besitzen können.

Ein weiteres Problem bei der Reinigung der Dieselabgase betrifft die Anwesenheit von Schwefel im Dieselkraftstoff. Schwefel kann sich auf dem Trägeroxid und dem Edelmetall abscheiden und zu einer Deaktivierung der Oxidationskatalysatoren durch Katalysatorvergiftung beitragen. Platin-haltige Oxidationskatalysatoren zeigen in der Regel eine vorteilhaft gute Resistenz gegenüber Schwefel. In den bisherigen Katalysatorformulierungen erwies sich Platin hinsichtlich der anderen Metallen der Platingruppe wie Rhodium, Palladium oder Iridium als deutlich überlegen.

Bezüglich der Abgasnachbehandlung von mageren Otto-Motoren, wie beispielsweise den direkt einspritzenden Otto-Motoren, werden Abgassysteme verwendet, die sich entweder aus einem 3-Weg-Katalysator oder einem Oxidationskatalysator und einem nachgeschalteten $NO_x$-Speicherkatalysator zusammensetzen. Dem 3-Weg-Katalysator beziehungsweise Oxidationskatalysator kommt insbesondere die Aufgabe zu, die vergleichsweise hohen, im homogenen Magerbetrieb oder besonders im Schichtladebetrieb auftretenden Kohlenwasserstoffemissionen zu minimieren. Die thermische Stabilität sowie eine möglichst hohe Aktivität bei niedrigen Temperaturen entsprechender, meist motornah eingesetzten Katalysatoren, spielen dabei eine überragende Rolle.

Die erfindungsgemäße Aufgabe bestand darin, einen Katalysator zur Entfernung von Schadstoffen aus Abgasen von mageren Verbrennungsmotoren und Ablüften, zu entwickeln, der mit hoher Niedrigtemperaturaktivität CO und HC zu $CO_2$ und Wasser oxidieren kann, und der gleichzeitig eine verbesserte thermische Stabilität gegenüber den Katalysatoren des Standes der Technik sowie eine gute Schwefelresistenz aufweist. Gleichzeitig sollte dieser Katalysator effizient Kohlenwasserstoffe entfernen. Zusammen mit einer Verbesserung der Leistungseigenschaften des zu entwickelnden Katalysators sollte auch ein Weg gefunden werden, die Materialkosten gegenüber den derzeitig eingesetzten Katalysatoren zu erniedrigen.

Diese Aufgabe konnte mit einem Katalysator gelöst werden, der dadurch gekennzeichnet ist, dass er

(i) eine Zusammensetzung umfassend Palladium, Zinnoxid und ein Trägeroxid,

(ii) einen Zeolith und

(iii) eine Dotiersubstanz, mit der der Zeolith (ii) dotiert ist, enthält.

Der Katalysator ist thermisch sehr stabil bei gleichzeitig guter Schwefelresistenz. Nach thermischer Hochtemperaturalterung zeigt er für die CO- und HC-Oxidation im Vergleich zu Katalysatoren des Standes der Technik eine verbesserte Wirkung.

Ferner kann im Katalysator auf das teure Edelmetall Platin zum überwiegenden Teil beziehungsweise sogar ganz verzichtet werden, sodass im Vergleich zu den Katalysatoren des Standes der Technik eine Einsparung bei den Materialkosten möglich ist.

Bei Verzicht auf Platin oder beim Einsatz von lediglich geringen Platinmengen zeigen die erfindungsgemäßen Katalysatoren praktisch keine Neigung zur Oxidation von NO zu $NO_2$ durch den Luftsauerstoff, wodurch Geruchsbelästigungen minimiert werden können.

Die Dotiersubstanz (iii) ist vorzugsweise ausgewählt aus der Gruppe der Elemente bestehend aus Indium, Gallium, Zinn, Eisen, Seltenerdelemente, Palladium, Platin, Gold und Silber und Verbindungen davon.

Die Dotiersubstanz kann sich dabei auf oder im Zeolith (ii) befinden. Ferner kann der Zeolith teilweise oder vollständig mit der Dotiersubstanz dotiert sein.

Weiterhin kann die Zusammensetzung (i) einen Promotor enthalten, der vorzugsweise aus der Gruppe der Elemente bestehend aus Indium, Gallium, Seltenerdelemente, Alkalimetalle, Erdalkalimetalle, Platin, Gold, Silber, Eisen und Verbindungen davon ausgewählt ist.

Die im oder auf dem Zeolith vorliegende Dotiersubstanz kann mit dem Promotor identisch sein. Es ist jedoch auch möglich, dass Dotiersubstanz und Promotor verschieden sind.

Es können jeweils ein oder mehrere Zeolithe und Trägeroxide sowie ein oder mehrere Dotiersubstanzen und Promotoren eingesetzt werden.

Vorzugsweise enthält der Katalysator eine Zusammensetzung, die aus Palladium, Zinnoxid und einem Trägeroxid und optional einem Promotor besteht, der vorzugsweise eines der oben definierten Elemente oder eine Verbindung davon ist.

Bevorzugte Verbindungen der oben genannten Elemente sind die Oxide und Suboxide, die Hydroxide und Carbonate.

Beispielsweise umfasst der Begriff "Palladium", "Platin", "Gold" und "Silber" sowohl die Elemente wie auch Verbindungen davon, beispielsweise Oxide und Suboxide.

Die Begriffe "Zinnoxid", "Indiumoxid", "Galliumoxid", "Eisenoxid", "Alkalimetalloxid", "Erdalkalimetalloxid" und "Seltenerdelementoxid" sowie die Bezeichnung "Oxid des Indiums, Galliums, Zinns, der Akalimetalle, Erdalkalimetalle und Seltenerdelemente" schließen alle möglichen Oxide und Suboxide sowie alle möglichen Hydroxide und Carbonate ein.

Der Begriff "Alkalimetalloxid" umfasst sämtliche Oxide, Suboxide, Hydroxide und Carbonate der Elemente Li, Na, K, Rb und Cs.

Der Begriff "Erdalkalimetalloxid" umfasst sämtliche Oxide, Suboxide, Hydroxide und Carbonate der Elemente Mg, Ca, Sr und Ba.

Der Begriff "Seltenerdelementoxid" umfasst sämtliche Oxide, Suboxide, Hydroxide und Carbonate der Elemente La, Ce, Pr, Nd, Pm, Sm, Eu, Gd, Tb, Dy, Ho, Er, Tm, Yb, Lu, Y und Sc.

Als weitere Verbindungen, in denen die vorstehend genannten Elemente vorliegen können, sind beispielsweise Phosphor-haltige wie Phosphate oder Stickstoffhaltige wie Nitrate oder Schwefel-haltige wie Sulfate zu nennen.

Unter dem Begriff "Dotiersubstanz" sind vorzugsweise die oben genannten Elemente und deren Verbindungen zu verstehen. Sie weisen eine im Allgemeinen die Katalysatoraktivität steigernde Wirkung auf. Sie können während der Herstellung des Katalysators auf den Zeolith (ii) aufgebracht werden. Es ist aber auch möglich, bei der Herstellung des Katalysators Zeolithe einzusetzen, die bereits die Dotiersubstanz enthalten.

Unter dem Begriff "Promotor" sind vorzugsweise die oben genannten Elemente und deren Verbindungen zu verstehen. Sie weisen eine im Allgemeinen die Katalysatoraktivität steigernde Wirkung auf. Sie werden bei der Herstellung des Katalysators auf die Zusammensetzung (i) aufgebracht.

Der Begriff "Trägeroxid" bedeutet vorzugsweise ein Oxid, das thermisch stabil ist und eine hohe Oberfläche besitzt. Der Begriff schließt auch eine Mischung aus mindestens zwei unterschiedlichen Trägeroxiden ein.

Solche Oxide besitzen vorzugsweise eine BET-Oberfläche von größer als 10 m$^2$/g. Besonders bevorzugt sind Oxide mit einer BET-Oberfläche von größer als 50 m$^2$/g, mehr bevorzugt mit einer BET-Oberfläche in einem Bereich von 60 bis 350 m$^2$/g.

Bevorzugt werden Trägeroxide eingesetzt, die auch noch nach hoher Temperaturbelastung eine hohe BET-Oberfläche aufweisen. Weiter bevorzugt ist auch ein Trägeroxid mit einer geringen Tendenz zur Bindung von Schwefeloxiden (SO$_x$).

Unter einem Silizium-haltigen oder Aluminium-haltigen Trägeroxid ist ein Trägeroxid zu verstehen, das insbesondere Siliziumoxid, Aluminiumoxid, Silizium/Aluminium-Mischoxid, Alumosilikat, Kaolin, modifiziertes Kaolin oder Mischungen daraus enthält.

Zudem kann auch ein Siliziumdioxid eingesetzt werden, das pyrogen ist oder durch Fällung von Kieselsäuren hergestellt wurde.

Bevorzugt können auch pyrogenes Aluminumoxid, a-Aluminiumoxid, δ- Aluminiumoxid, theta-Aluminiumoxid und γ- Aluminiumoxid eingesetzt werden.

Außerdem können auch Aluminiumoxide verwendet werden, die mit Siliziumoxid, durch Oxide der Erdalkalielemente oder der Seltenerdelemente dotiert sind.

Unter dem Begriff "modifizierte Kaoline" werden Kaoline verstanden, bei denen ein Teil des in der Struktur vorhandenen Al$_2$O$_3$ durch eine thermische Behandlung und eine sich daran anschließende Säurebehandlung herausgelöst wurde. Die auf diese Weise behandelten Kaoline besitzen eine höhere BET-Oberfläche und einen niedrigeren Aluminiumgehalt gegenüber dem Ausgangsmaterial. Entsprechende modifizierte Kaoline können auch als Alumosilikate bezeichnet werden und sind kommerziell erhältlich.

Einige Beispiele für Trägeroxide, die für die Erfindung geeignet sind, auf die sich die vorliegende Erfindung jedoch nicht beschränkt, sind folgende kommerziell erhältliche Oxide:

Siralox 5/320 (Fa. Sasol), Siralox 10/320 (Fa. Sasol), Siralox 5/170 (Fa. Sasol), Puralox SCFa 140 (Fa. Sasol), Puralox SCFa 140 L3 (Sasol), F (Fa. Dorfner)., F50 (Fa. Dorfner), F80 (Fa. Dorfner), F+5/24 (Fa. Dorfner), F+5/48 (Fa. Dorfner), F-5/24 (Fa. Dorfner., F-5/48 (Fa. Dorfner), F+10/2 (Fa. Dorfner), F+20/2 (Fa. Dorfner), SIAL 35 (Fa. Dorfner), SIAL 25-H (Fa. Dorfner), Alumina C (Fa. Degussa), SA 3*77 (Fa. Norton), SA 5262 (Fa. Norton), SA 6176 (Fa. Norton), Alumina HiQR10 (Fa. Alcoa), Alumina HiQR30 (Fa. Alcoa), Korund (Fa. Alcoa), MI307 (Fa. Grace Davison), MI407 (Fa. Grace Davison), MI286 (Fa. Grace Davison), MI386 (Fa. Grace Davison), MI396 (Fa. Grace Davison), MI486 (Fa. Grace Davison), Sident 9 (Fa. Degussa), Sipernat C 600 (Fa. Degussa), Sipernat 160 (Fa.

Degussa), Ultrasil 360 (Fa. Degussa), Ultrasil VN 2 GR (Fa. Degussa), Ultrasil 7000 GR (Fa. Degussa), Kieselsäure 22, (Fa. Degussa), Aerosil 150 (Degussa), Aerosil 300 (Degussa), kalziniertes Hydrotalzit Pural MG70 (Sasol), kalziniertes Hydrotalzit Pural MG50 (Sasol).

Zeolithe sind bekannte Verbindungen und teilweise kommerziell erhältlich.

Im Rahmen der vorliegenden Erfindung ist es möglich, nur einen einzigen Zeolith oder eine einzige Zeolith-Modifikation oder Mischungen aus verschiedenen Zeolithen oder Zeolith-Modifikationen einzusetzen. Der Begriff Modifikation umfasst dabei den Zeolith-Typ sowie die spezifische chemische Zusammensetzung, z. B. das Si/Al-Verhältnis.

Der Zeolith liegt als Ausgangsstoff meist in der Natrium-Form, Ammonium-Form oder in der H-Form vor. Es ist möglich, die Natrium-, Ammonium- oder H-Form durch Imprägnierung mit Metallsalzen und -oxiden oder durch Ionenaustausch in eine andere ionische Form zu überführen. Als Beispiel sei die Überführung von Na-Y-Zeolith in SE-Zeolith (SE=Seltenerdelement) durch Ionenaustausch in wäßriger Seltenerdelementchlorid-Lösung genannt. Der Ionenaustausch stellt eine besondere Form der Dotierung eines Zeolithen dar. Im Rahmen der vorliegenden Erfindung ist die Dotierung des Zeolithen nicht nur als Ionenaustausch zu verstehen, sondern allgemein als Abscheidung einer Dotiersubstanz auf dem Zeolith oder im Zeolith. Dabei kann die Dotiersubstanz vorzugsweise als Ion, als Oxid, Suboxid, Carbonat, Sulfat, Nitrat oder in elementarer Form vorliegen.

Auch können alle Dotierungsmethoden des Stands der Technik verwendet werden, wie Ionenaustausch, Imprägnierung, Auffällung oder Abscheidung der Dotiersubstanz aus der Gasphase.

Soll der Zeolith beispielsweise Eisen enthalten, so kann die Dotierung des Zeolithen mit Eisen in der Weise geschehen, dass eine wasserlösliche Eisenverbindung, z.B. in Form von wässrigem Eisennitrat mit dem Zeolithen in Kontakt gebracht wird. Nach Trocknung und gegebenenfalls Kalzinierung liegt ein Eisendotierter Zeolith vor. Soll der Zeolith beispielsweise mit Gold und Eisen dotiert werden, so kann eine wasserlösliche Goldverbindung, z.B. HAuCl$_4$, der Eisennitratlösung beigemengt werden, so dass die Goldverbindung und die Eisenverbindung gleichzeitig auf den Zeolith aufimprägniert werden können.

Bei der Verwendung von überwiegend Silizium-haltigen Zeolithen sollte beachtet werden, dass der Gesamtgehalt an Natrium im Katalysator nicht wesentlich ansteigt, da sonst die Eigenschaften negativ beeinträchtigt werden können.

Besonders geeignet sind die Zeolith-Typen Y-Zeolith, DAY-Zeolith (Dealuminated Y), USY (Ultra Stabilized Y), ZSM-5, ZSM-11, ZSM-20, Silikalit, Ferrierit, Mordenit und β-Zeolith.

Die Zeolithe können auch hydrothermal behandelt sein.

Besonders geeignet sind auch hydrothermal-stabile Zeolithe mit einem Si/Al-Verhältnis > 8, wobei höhere Si/Al-Verhältnisse bevorzugt sind.

Beispiele für Zeolithe, die für die Erfindung geeignet sind, auf die sich die vorliegende Erfindung jedoch nicht beschränkt, sind: Mordenit HSZ®-600 (Fa. Tosoh), Ferrierit HSZ@-700 (Fa. Tosoh), HSZ@-900 (Fa. Tosoh), USY HSZ@-300 (Fa. Tosoh), DAY Wessalith HY25/5 (Fa. Degussa), ZSM-5 $SiO_2/Al_2O_3$ 25-30 (Fa. Grace Davison), ZSM-5 $SiO_2/Al_2O_3$ 50-55 (Fa. Grace Davison), β-Zeolith HBEA-25 (Fa. Süd-Chemie), HBEA-150 (Fa. Süd-Chemie), Zeocat PB-H (Fa. Zeochem).

Es können auch mehrere Zeolithe eingesetzt werden. Diese unterscheiden sich dann vorzugsweise darin, dass sie unterschiedliche Porenradien oder unterschiedliche Si/Al-Mengenverhältnisse oder unterschiedliche Porenradien und unterschiedliche Si/Al-Mengenverhältnisse aufweisen.

Die Beimengung eines Zeolithen zur Formulierung von Dieseloxidations-Katalysatoren ist bereits aus der EP 0 800 856 bekannt. Zeolithe besitzen die Fähigkeit, Kohlenwasserstoffe bei niedrigen Abgastemperaturen zu adsorbieren, und diese zu desorbieren, wenn die Anspringtemperatur des Katalysators erreicht oder überschritten wird.

Wie in der EP 1129 764 A1 offenbart, kann die Wirkungsweise der Zeolithe auch darin liegen, im Abgas vorkommende langkettige Kohlenwasserstoffe zu "crakken", d.h. in kleinere Bruchstücke zu zerlegen, die dann leichter durch das Edelmetall oxidiert werden können.

In der EP 525761B1 wird ein katalytisch wirkendes Material beansprucht, das aus einem mit Zeolith beschichteten Fasermaterial besteht, wobei der Zeolith ein Träger von Gold- und Eisen-haltigen Spezies darstellt. Das Material wird aufgrund einer katalytischen Wirkung zum Desodorieren von Ablüften im sanitären Bereich genutzt.

Die besonders hohe Aktivität und Stabilität des Katalysators wird durch die besonderen Eigenschaften der Palladium/Zinnoxid/Trägeroxids sowie durch die besondere Art des Zeolithen und der Dotiersubstanz bzw. der Dotierung des Zeolithen hervorgerufen.

Weiterhin sind die spezifischen Mengenverhältnisse aller im Katalysator auftretenden Zeolithe, Oxideund Elemente — einschließlich der Dotierungssubstanzen und Promotoren - bedeutsam.

In einer besonderen Ausführungsform wird die Mischung von mindestens zwei unterschiedlichen Zeolithtypen bevorzugt. Beispielsweise kann es sinnvoll sein, einen Zeolithen mit kleinen bis mittleren Poren zusammen mit einem Zeolithen mit mittleren bis großen Poren einzusetzen, um sowohl kleine wie auch große Kohlenwasserstoffinoleküle optimal zu adsorbieren und zu $CO_2$ und $H_2O$ zu oxidieren.

Weiterhin bietet sich die Abmischung von Zeolithen mit geringer Polarität und leicht erhöhter Polarität an, um sowohl polare als auch unpolare Kohlenwasserstoffe zu adsorbieren und zu aktivieren. So kann die Polarität nicht nur durch den Zeolith-Typ beeinflusst werden, sondern auch durch das Si/Al-Verhältnis. In der Regel steigt mit zunehmendem Aluminiumanteil die Zahl der sauren Zentren eines Zeolithen und somit dessen Polarität an. Zudem kann in der Regel mit zunehmendem Aluminiumanteil mehr Dotiersubstanz durch Ionenaustausch in kationischer Form in den Zeolithen eingebracht werden.

Im Besonderen hat es sich bewährt, eine "unedle" Dotiersubstanz mit einer "edlen" Dotiersubstanz auf dem Zeolithen oder zumindest auf einen Teil des im Katalysator eingebrachten Zeolithen abzuscheiden, da auf diese Weise sowohl eine gute Adsorption des Kohlenwasserstoffe wie auch eine gute Oxidation der Kohlenwasserstoffe erreicht wird.

Als "edle" Dotiersubstanz sind die Oxide und Metalle des Platins, Palladiums, Golds und Silbers zu verstehen.

Beispielsweise sind die Kombinationen Indium/Palladium und Eisen/Platin wirkungsvoll.

Ein wesentliches Merkmal der Palladium/Zinnoxid/Trägeroxid-Zusammensetzung liegt darin, dass das auf dem Trägeroxid abgeschiedene Zinnoxid eine röntgenographisch amorphe oder eine nanopartikuläre Form aufweist.

Überraschender Weise bleibt die röntgenographisch amorphe bzw. nanopartikuläre Form desjenigen Zinnoxids, das auf dem Trägeroxid abgeschieden ist, auch bei hohen Beladungen des Trägeroxids mit Zinn erhalten.

Der Begriff "hohe Beladung" bezieht sich dabei auf einen Gehalt an Zinn zu Trägeroxid von etwa 20 bis 30 Gew.-% (bezogen auf elementares Zinn).

Das Palladium liegt in Kombination mit dem Zinnoxid ebenfalls in einer röntgenographisch amorphen oder einer nanopartikulärer Form auf dem vorzugsweise Aluminium-haltigen bzw. Silizium-haltigen Trägeroxid vor.

Der Begriff "röntgenographisch amorph" soll bedeuten, dass keine auswertbaren für eine Substanz charakteristischen Reflexe mittels Röntgenweitwinkelbeugung erhalten werden. Diese Aussage gilt zumindest für die im experimentellen Teil offenbarten Versuchsbedingungen.

Allgemein lassen sich Partikelgrößen mit Hilfe der Scherrer-Gleichung aus Röntgendiffraktogrammen ermitteln:

Scherrer-Gleichung: $D = (0,9 * \lambda) / (B \cos \theta_B)$

Hierin bedeuten "D" die Dicke eines Kristallits, "$\lambda$" die Wellenlänge des verwendeten Röntgenstrahls, "B" die Halbwertsbreite des jeweiligen Reflexes und $\theta_B$ dessen Position. Die frischen, d.h. bei 500 °C kalzinierten, Katalysatoren weisen nach der Scherrer-Methode ermittelte Zinnoxidpartikelgrößen von etwa 1 - 100 nm auf, wobei die Partikelgrößen des Zinnoxids vom verwendeten Trägeroxid abhängen können. In einigen Fällen sind sogar keinerlei Reflexe des Zinnoxids mehr sichtbar, so dass das auf diesen Katalysatoren vorliegende Zinnoxid als "röntgenographisch amorph" bezeichnet werden kann. Nach Alterung bei 700 °C ist je nach verwendetem Trägeroxid kein oder ein nur sehr geringes Anwachsen der Zinnoxidpartikel festzustellen. Dieses unterstreicht die sehr gute Dauerhaltbarkeit der erfindungsgemäßen Katalysatoren.

Weiterhin kann die Zusammensetzung (i) Palladium/Zinnoxid/Trägeroxid Promotoren enthalten, welche aus den Oxiden und Elementen des Indiums, Galliums, der Alkalielemente, Erdalkalielemente, Seltenerdelemente, des Eisens, Platins, des Golds oder Silbers ausgewählt werden und zu einer Aktivitätssteigerung des Katalysators beitragen können. In der Regel liegen die Promotoren ebenfalls homogen in der Palladium/Zinnoxid/Trägoxid-Zusammensetzung (i) vor.

Die Wahl der geeigneten Promotoren ergibt sich in der Regel aus der spezifischen Anwendung des Katalysators und hängt beispielsweise von den Konzentrationen von CO, HC und NOx im Abgas des betrachteten Motors ab.

Die bevorzugten Ausführungsformen a) bis i) des Katalysators zeichnen sich auch dadurch aus, dass

a) Palladium und Zinnoxid, und ggf. ein Promotor in unmittelbarer topographischer Nähe gemeinsam auf einem Trägeroxid-Partikel vorliegen,

b) das Zinnoxid in einer röntgenographisch amorphen oder einer nanopartikulärer Form auf dem Trägeroxid vorliegt,

c) das Palladium zusammen mit dem Zinnoxid in einer röntgenographisch amorphen oder einer nanopartikulären Form auf dem Trägeroxid vorliegt,

d) Zinnoxid und Palladium sehr homogen auf der Oberfläche des Trägeroxids verteilt sind,

e) das Trägeroxid gemäß der Punkte a) - e) Aluminium-haltig und/oder Siliziumhaltig ist,

f) ein hydrothermal stabiler Zeolith mit einem Silizium/Aluminium-Verhältnis von > 8 eingesetzt wird,

g) zumindest ein Teil des Zeolith mit mindestens einer Dotiersubstanz dotiert ist,

h) bevorzugt eine Mischung aus mindestens zwei unterschiedlichen Zeolithtypen eingesetzt wird.

Die Homogenität der Verteilung des Palladiums, Zinnoxids und ggf. der Promotoren auf dem Trägeroxid kann dadurch beschrieben werden, dass vorzugsweise

(1) Palladium, Zinnoxid und Promotoren - bei Betrachtung der individuellen Partikel - jeweils in annähernd gleichbleibenden Konzentrationen über die Partikel des Trägeroxids verteilt sind, und

(2) die Konzentrationsverhältnisse - bei Betrachtung der individuellen Partikel - von Zinnoxid zu Trägeroxid sowie die Konzentrationsverhältnisse von Zinnoxid zu Palladium auf der Oberfläche der Partikel des Trägeroxids annähernd konstant sind.

Diese Verteilung beinhaltet auch, dass der Katalysator beispielsweise Abmischungen von mindestens zwei Palladium-enthaltenden Trägeroxiden enthält, die jeweils verschiedene Konzentrationen des Zinnoxids und/oder des Palladiums aufweisen. Ferner beinhaltet diese Verteilung auch, dass der auf einen Honigwaben-förmigen Trägerkörper aufzubringende Katalysator nach dem Verfahren der Gradientenbeschichtung hergestellt wird. Bei einer Gradientenbeschichtung wird ein Gradient - beispielsweise des Palladiums, der Promotoren und ggf. weiterer Komponenten wie beispielsweise des Silbers - beispielsweise über die Länge des Honigwabenkörpers eingestellt. Auf diese Weise soll am Ort des Eintritts des Abgases des Verbrennungsmotors in den Katalysator eine höhere Konzentration an Aktivmaterial bereitgestellt werden, um einen insgesamt besseren Wirkungsgrad des Aktivmaterials zu erreichen.

Vorzugsweise bezieht sich der Begriff Gradientenbeschichtung auf einen Gradienten in der chemischen Zusammensetzung.

Der Katalysator wird für die Anwendung vorzugsweise als Pulver, Granulat, Extrudat, Formkörper oder als beschichteter Wabenkörper eingesetzt.

In einer bevorzugten Ausführungsform liegt der Katalysator als beschichteter Formkörper, vorzugsweise als beschichteter Wabenkörper vor, wobei er in Form einer Doppelschicht strukturiert ist.

Vorzugsweise liegt der Katalysator als beschichteter Formkörper vor, wobei auf dem Formkörper eine Schicht aus dem Trägeroxid der Zusammensetzung (i) aufgebracht ist und auf besagter Schicht eine Schicht aufgebracht ist, die den Zeolith (ii) enthält, der mit der Dotiersubstanz (iii) dotiert ist.

In dieser Ausführungsform enthält die Doppelschicht eine Zeolith-reiche Schicht und eine Zeolith-arme Schicht.

Die Zeolith-arme Schicht stellt die untere Schicht dar, d. h. die Schicht, die unmittelbar auf dem Formkörper liegt, und die Zeolith-reiche Schicht die obere Schicht.

Die untere Zeolith-arme Schicht enthält die Zusammensetzung (i). Diese kann vorzugsweise bis zu 20 Gew.-% (bezogen auf die Gesamtmenge der Schicht) an Zeolith (ii) enthalten, der auch mit Dotiersubstanz (iii) dotiert sein kann. Besonders bevorzugt ist eine Menge von weniger als 10 Gew.-% Zeolith (ii).

Die obere Zeolith-reiche Schicht enthält vorzugsweise 60 bis 100 Gew.-% (bezogen auf die Gesamtmenge der Schicht) an Zeolith (ii), der mit der Dotiersubstanz (iii) dotiert ist. Besonders bevorzugt ist ein Anteil von 80 bis 100 Gew.-% Zeolith. Diese Schicht kann auch weitere undotierte Zeolithe, oxidische Bindemittel und Trägeroxide enthalten. Vorzugsweise werden dabei die Trägeroxide der Zusammensetzung (i) eingesetzt.

In einer anderen bevorzugten Ausführungsform liegen die Palladium/Zinnoxid/Trägeroxid-Zusammensetzung (i) und der Zeolith (ii) in einer physikalischen Mischung auf einem Trägerkörper vor, beispielsweise auf einem Honigwaben-Typ (honeycomb).

Der Katalysator weist vorzugsweise eine Struktur auf, in der zu Kanälen durchgeformte Makroporen existieren, die mit Meso- und/oder Mikroporen koexistieren.

Die besonderen katalytischen Eigenschaften des erfindungsgemäßen Katalysators werden durch die nachstehend offenbarten Verfahren zur Herstellung des Katalysators, durch die relativ hohe Beladung des Trägeroxids mit Promotor bzw. durch die Auswahl der Gewichtsanteile der Komponenten, die im Katalysator enthalten sind, sowie die Verwendung von Zeolith mit bestimmten Dotiersubstanzen erreicht.

Der Katalysator wird nach einem Verfahren hergestellt, dadurch gekennzeichnet, dass es die Stufe (j) oder (jj) umfasst:

(j) Inkontaktbringen einer Zinnverbindung, einer Palladiumverbindung, eines Trägeroxids und gegebenenfalls eines Promotors mit einem Zeolith und einer Dotiersubstanz,

(jj) Inkontaktbringen einer Zinnverbindung, einer Palladiumverbindung, eines Trägeroxids und gegebenenfalls eines Promotors mit einem Zeolith, der mit einer Dotiersubstanz dotiert ist.

Unter "Palladium- und Zinnverbindung" sind alle Verbindungen zu verstehen, die in einem flüssigen Medium suspendiert werden können und/oder in diesem Medium vollständig oder zumindest teilweise löslich sind.

Unter "Dotiersubstanz" sind vorzugsweise die oben genannten Verbindungen zu verstehen.

Auch die Dotiersubstanz oder gegebenenfalls ein mitverwendeter Promotor werden in Form von Verbindungen eingesetzt, die in einem flüssigen Medium suspendiert werden können und/oder in diesem Medium vollständig oder zumindest teilweise löslich sind.

Vorzugsweise werden Palladium- und Zinnverbindung und die Dotiersubstanz und gegebenenfalls Promotoren eingesetzt, die im flüssigen Medium vollständig oder zumindest teilweise löslich sind.

Vorzugsweise ist das flüssige Medium Wasser.

Vorzugsweise werden Salze des Palladiums, Zinns der Promotoren und Dotiersubstanz. Salze sind beispielsweise die Salze anorganischer und organischer Säuren, wie Chloride, Bromide, Cyanide, Nitrate, Oxalate, Acetate oder Tartrate. Die Verwendung von Komplexverbindungen ist gleichfalls möglich. Ein Beispiel ist Gold-Dimethylacetonat.

Ferner können die eingesetzten Verbindungen des Palladiums, des Zinns, sowie Promotoren und Dotiersubstanz einer chemischen Behandlung unterzogen werden. Beispielsweise können sie mit Säuren oder Komplexbildnern versetzt werden, wie nachstehend bei den Zinnverbindungen beschrieben. Durch diese Behandlung können besagte Verbindungen beispielsweise in einen besonders guten Löslichkeitszustand versetzt werden, der für die vorgesehene Verarbeitung vorteilhaft ist.

Bevorzugt werden die entsprechenden Nitrat- und Acetat-Verbindungen eingesetzt. Die Seltenerdelementnitrate sind in technischem Maßstab beispielsweise durch Auflösung ihrer Carbonate in Salpetersäure zugänglich. Die Verwendung von Nitraten ist insbesondere dann vorteilhaft, wenn die Verbindungen des Zinns und des Palladiums gleichzeitig mit den Verbindungen der Promotoren auf das Trägeroxid aufgebracht werden.

Als Zinnverbindung werden bevorzugt in Wasser gelöstes oder suspendiertes Zinn-Oxalat oder Zinn-Oxid eingesetzt, wobei die Löslichkeit durch Zusatz von Säuren, beispielsweise Salpetersäure, weiter erhöht werden kann.

Bei der Herstellung des Katalysators wird vorzugsweise ein Prozess eingesetzt, bei dem die Ausgangsverbindungen des Palladiums, Zinns, der Promotoren und der Dotiersubstanz mittels wässerigem Medium mit dem Trägeroxid bzw. Zeolith in Verbindung gebracht werden.

Zur Herstellung der Katalysatoren wird ein Verfahren bevorzugt, bei dem möglichst Chlorid-freie Zinn- und Palladiumverbindungen eingesetzt werden, da eine spätere Freisetzung von Chlorid-haltigen Verbindungen aus dem Katalysator zu Schädigungen der Abgasanlagen führen kann.

"Inkontaktbringen" der Stufe (j) bedeutet, dass Verbindungen des Zinns, des Palladiums und gegebenenfalls der Promotoren, des Zeolithen und der Dotiersubstanz in suspendierter oder vorzugsweise gelöster Form entweder gleichzeitig, in Abmischungen oder sequentiell auf das gemeinsame Trägeroxid aufgebracht werden. Beispielsweise kann zunächst die Verbindungen des Zinns auf das Trägeroxid aufgebracht werden, während die Verbindungen des Palladiums und der Promotoren in einer gemeinsamen Lösung angesetzt und in einem Folgeschritt mit dem Trägeroxid in Kontakt gebracht werden. Auch ist es beispielsweise möglich, separate Lösungen der Promotoren und der Palladiumverbindungen herzustellen und diese sequentiell mit dem Trägeroxid in Kontakt zu bringen. In der Regel erfolgt nach jedem Inkontaktbringen eine Trocknung.

"Inkontaktbringen" der Stufe (jj) bedeutet, dass Verbindungen des Zinns, des Palladiums und gegebenenfalls der Promotoren, und des mit der Dotiersubstanz dotierten Zeolithen in suspendierter oder vorzugsweise gelöster Form entweder gleichzeitig, in Abmischungen oder sequentiell auf das gemeinsame Trägeroxid aufgebracht werden. Dabei wird vorher die Dotiersubstanz in suspendierter oder vorzugsweise gelöster Form auf oder in dem Zeolith abgeschieden. Beispielsweise kann der Zeolith mit einer wässrigen Lösung der Verbindungen der entsprechenden Dotiersubstanz imprägniert werden. Nach Trocknung und Kalzinierung des imprägnierten Zeolithen verbleiben die Dotiersubstanz auf bzw. im Zeolith. In der Regel kann dann der dotierte Zeolith in wässrigem Medium, z.B. in Form einer wässrigen Suspension weiterverarbeitet werden, ohne dass die Dotiersubstanz wieder in Lösung geht.

Nach der Beladung des Trägeroxids und des Zeolithen mit den Verbindungen Zinns, des Palladiums, der Promotoren und der Dotiersubstanz schließen sich je nach Herstellverfahren zumindest ein Trocknungsschritt und in der Regel zumindest ein Kalzinierungsschritt an. Im Falle einer Sprühkalzinierung, wie beispielsweise in der EP 0 957 064 B1 beschrieben, können Trocknung und Kalzinierung praktisch in einem einzigen Verfahrensschritt durchgeführt werden.

Die geschilderten Reaktionssequenzen können auch mit einem mit der Dotierungssubstanz dotierten Zeolith durchgeführt werden.

Nach Aufbringen aller Bestandteile des Katalysators auf den Formkörper wird der Formkörper in der Regel getrocknet und kalziniert.

Demzufolge enthält das Verfahren auch die Stufe (jjj):

(jjj) Kalzinierung.

Die Kalzinierungsstufe wird bei einer Temperatur von vorzugsweise 200 bis 1000 °C, mehr bevorzugt 300 °C bis 900 °C, insbesondere 400 bis 800 °C durchgeführt.

Durch den Kalzinierungsschritt werden die Verbindungen des Zinns, der Promotoren und der Dotiersubstanz thermisch fixiert und in ihre katalytisch wirksame From überführt.

Durch die Kalzinierung wird auch die mechanische Festigkeit des Katalysators erhöht.

Die Kalzinierung kann beispielsweise in trockener oder feuchter Luft, in Stickstoff, Formiergas oder auch Wasserdampf durchgeführt werden.

Für die Herstellung des Katalysators werden alle Ausführungsformen bevorzugt, die sich in der Katalysatorforschung allgemein bereits bewährt haben, insbesondere "Washcoat"- und/oder "Honeycomb"- und "Pulver- oder Pellet"-Technologien. Beispielhaft seien die nachstehenden Ausführungsformen (α), (β), (γ), (δ), (ε) und (ζ) erläutert.

(α) Man kann so vorgehen, dass das Trägeroxid zusammen mit dem Zeolith in wässeriger Suspension auf Partikelgrößen von wenigen Mikrometern gemahlen und dann auf einen keramischen oder metallischen Formkörper aufgebracht wird. Dazu wird der Formkörper in die Trägeroxid/Zeolith-Suspension eingetaucht, wobei er mit dem Trägeroxid und dem Zeolith beladen wird. Nach thermischer Behandlung wie Trocknung oder Kalzinierung wird ein Formkörper erhalten, der mit Trägeroxid und dem Zeolith beschichtet ist. Dann wird der beschichtete Formkörper mit den Verbindungen des Zinns, des Palladiums, der Dotiersubstanz und ggf. der Promotoren imprägniert, wodurch Trägeroxid und Zeolith beladen werden. Je nach Löslichkeiten der Verbindungen untereinander und bevorzugter Prozessführung können die zuvorgenannten Verbindungen einzeln oder in geeigneten Abmischungen aufgebracht werden. Nach jedem Imprägnierschritt erfolgt in der Regel jeweils ein Trockenschritt. Imprägnier- und Trockenschritte werden so oft wiederholt werden, bis alle Verbindungen auf den Träger aufimprägniert sind und bis die gewünschten Beladungsmengen erreicht sind. Nach Beendigung der Imprägnier- und Trockenschritte erfolgt eine Kalzinierung.

(β) Es ist aber auch möglich, die gelösten Verbindungen des Zinns, des Palladiums, der Dotiersubstanz und optional der Promotoren der gemahlenen Trägeroxid/Zeolith-Suspension zuzusetzen und dann den Formkörper in die Suspension einzutauchen, zu beladen, d. h. zu imprägnieren, zu trocknen und zu kalzinieren. Der Vorgang kann so oft wiederholt werden, bis die gewünschte Beladungsmenge erreicht ist.

(γ) Man kann auch so vorgehen, dass das Trägeroxid in wässeriger Suspension auf Partikelgrößen von wenigen Mikrometern gemahlen und dann auf einen keramischen oder metallischen Formkörper aufgebracht wird. Dazu wird der Formkörper in die Trägeroxid-Suspension eingetaucht, wobei er mit dem Trägeroxid beladen, d. h. imprägniert wird. Nach thermischer Behandlung wie Trocknung oder Kalzinierung wird ein Formkörper erhalten, der mit Trägeroxid beschichtet ist. Nun kann der Zeolith in der Weise auf den Träger aufgebracht werden, dass er zunächst mit zusätzlichem, gemahlenen Trägeroxid zu einer wässrigen Suspension angesetzt wird und dann durch erneute Tauchung des Formkörpers auf diesen aufgezogen wird. Der Zusatz von Trägeroxid in die Zeolithsuspension dient der Verbesserung der Hafteigenschaften des Zeolithen auf dem Träger. Der Träger wird erneut getrocknet oder kalziniert. Auf dem Trägerkörper liegen nun Trägeroxid und Zeolith/Trägeroxid in Form zweier Schichten, d.h. einer Zeolith-armen und einer Zeolith-reichen Schicht, vor. Grundsätzlich können sich die Trägeroxide der Zeolith-armen und der Zeolith-reichen Schicht hinsichtlich ihrer physikalisch/chemischen Eigenschaften unterscheiden.

Dann wird der beschichtete Formkörper durch Tauchung mit den Verbindungen des Zinns, des Palladiums, der Dotiersubstanz und ggf. der Promotoren imprägniert. Je nach Löslichkeiten und bevorzugter Prozessführung können die zuvorgenannten Verbindungen einzeln oder in geeigneten Abmischungen aufgebracht werden. Nach jedem Imprägnierschritt erfolgt jeweils ein Trockenschritt. Der Vorgang kann so oft wiederholt werden, bis die gewünschte Beladungsmenge erreicht ist. Alternativ kann auch zunächst das Trägeroxid auf den Träger aufgebracht werden, dann die Imprägnierung mit den Zinn-, Palladium- und ggf. Promotorverbindungen gefolgt von einem Trockenschritt durchgeführt werden. Anschließend kann eine Zeolith-reiche Schicht durch Tränkung des Formkörpers in einer Zeolith-haltigen Suspension aufgebracht werden. Nach Trocknung und einer Imprägnierung mit zumindest einer Verbindung eines Dotiersubstanz erfolgen eine weitere Trocknung und Kalzinierung.

(δ) Es ist weiterhin möglich, eine Mischung aus pulverförmigem Trägeroxid und Zeolith zunächst mit den Verbindungen des Zinns, des Palladiums, der Dotiersubstanz und ggf. der Promotoren zu imprägnieren, wobei das verwandte Gesamtvolumen der Imprägnierlösung bzw. der Imprägnierlösungen unterhalb der maximalen Flüssigkeitsaufnahmekapazität des Trägeroxids liegt. Auf diese Weise kann ein trocken erscheinendes imprägniertes Trägeroxid/Zeolith-Pulver gewonnen werden, das in einem Folgeschritt getrocknet und kalziniert wird. Das auf diese Weise gewonnene Zusammensetzung kann dann in Wasser vorgelegt und gemahlen werden. Anschließend kann der Washcoat auf einen Formkörper aufgebracht werden.

(ε) Es ist auch möglich, die Verbindungen des Zinns, des Palladiums und ggf. der Promotoren einer Trägeroxid-Suspension zuzusetzen, den Feststoff dann abzufiltrieren, zu trocknen bzw. zu kalzinieren. Alternativ dazu kann die Trägeroxid, Zinn- und Palladiumverbindungen und ggf. Promotorverbindungen enthaltene Suspension sprühgetrocknet und kalziniert werden. In einem separaten Ansatz können in entsprechender Weise Dotiersubstanz auf den Zeolithen aufgebracht werden. Dann können das Palladium- und Zinnoxid-haltige Trägeroxid und der dotierte Zeolith entweder zu einem gemeinsamen Washcoat in Form einer Einfach-Schicht auf einen Träger aufgebracht werden oder zu zwei separaten Washcoats verarbeitet und sequentiell, d.h. in Form einer Doppel-Schicht, auf einen Träger aufgebracht werden. Der Beschichtung des Trägers schließt sich eine Trocknung und eine Kalzinierung an. Der Katalysator kann beispielsweise aber auch in Pulverform erhalten werden oder zu einem Extrudat weiterverarbeitet werden.

(ζ) Es ist weiterhin möglich, das Trägeroxid in wäßrigem Medium vorzulegen und dann die Verbindungen des Zinns, und ggf. der Promotoren hinzuzufügen. Anschließend kann die Suspension sprühgetrocknet und kalziniert oder sprühkalziniert werden. In einem separaten Ansatz kann der Zeolith mit Dotiersubstanzen imprägniert oder ionengetauscht werden und beispielsweise durch Sprühtrocknung oder anderer gängige Trocknungs- und Kalzinierverfahren zu einem trockenen Pulver verarbeitet werden. Nun können das zinnhaltige Trägeroxid und der dotierte Zeolith in wäßrigen Medium vorgelegt und durch Mahlen zu einem Washcoat verarbeitet werden. Anschließend kann der Washcoat auf einen Formkörper aufgebracht werden. Nach einem Trocknungsschritt kann die Palladiumverbindung, ggf. mit weiteren Promotorverbindungen, aufimprägniert werden. Es schließt sich ein weiterer Trocknungsschritt sowie eine Kalzinierung an.

Das Zinn-haltige Trägeroxid und der dotierte Zeolith können auch separat voneinander zu Washcoats verarbeitet werden, so dass sich nach sequentieller Tauchung des Trägerkörpers in die Zinn-haltige Trägeroxidsuspension und anschließend in die Zeolithsuspension eine Doppelschicht-Struktur realisieren lässt.

Grundsätzlich sind zur Herstellung des Katalysators auch andere Abfolgen bekannter Prozessschritte realisierbar. Favorisiert werden insbesondere jedoch diejenigen Herstellrouten, bei denen eine möglichst gezielte Abscheidung der Zinnoxids und ggf. der Promotoren auf dem Trägeroxid sowie der Dotiersubstanz auf dem Zeolithen gelingt.

Zur homogenen Verteilung der Verbindungen auf Trägeroxid und Zeolith können außer den vorstehend beschriebenen Methoden, nämlich Tränken des Trägeroxids bzw. des Zeolithen mit Metallsalzlösungen, Imprägnieren der Trägermaterialien mit Metallsalzlösungen, Adsorption von Metallsalzen aus Flüssigkeiten auch das Aufsprühen von Lösungen, das Aufbringen durch Ausfällen aus Lösungen oder das Abscheiden aus Lösungen verwendet werden.

Auch das Aufbringen der Verbindungen des Zinns, des Palladiums, der Dotiersubstanz und optional der Promotoren aus einer Suspension ist möglich.

Neben den zuvor beschriebenen, notwendigen Komponenten des Katalysators können bei der Katalysatorherstellung oder zu dessen Nachbearbeitung Hilfs- und/oder Zusatzstoffe zugesetzt werden, so z. B. Oxide und Mischoxide als Additive zum Trägermaterial, Bindemittel, Füllstoffe, Kohlenwasserstoff-Adsorber oder andere adsorbierende Materialien, Dotierungen zum Erhöhen der Temperaturbeständigkeit sowie Mischungen aus mindestens zwei der vorstehend genannten Substanzen.

Diese weiteren Komponenten können in wasserlöslicher und/oder wasserunlöslicher Form vor oder nach der Beschichtung in den Washcoat eingebracht werden.

Für die Beladung des Trägeroxids durch Inkontaktbringen mit den gelösten Promotor- und Palladiumverbindungen sowie zur Trocknung und Kalzinierung können alle bekannten Verfahren verwendet werden. Diese hängen von den gewählten Herstellungsvarianten ab, insbesondere davon, ob der "Washcoat" zunächst auf einen Formkörper aufgebracht wird oder ob ein Pulverprozess gewählt wird. Sie umfassen beispielsweise Verfahren wie "Incipient Wetness", "Tauchimprägnierung", "Sprühimprägnierung", "Sprühtrocknung", "Sprühkalzinierung" und "Drehrohrkalzinierung", sind aber nicht auf diese beschränkt. Für die Beladung des Zeolithen durch Inkontaktbringen mit einer gelösten Goldverbindung sowie zur Trocknung und Kalzinierung können ebenfalls die zuvor genannten Prozesse verwendet werden.

Die Konfektionierung des Katalysators kann auch nach den bekannten Methoden erfolgen, beispielsweise durch Extrudieren oder Strangpressen.

Der erfindungsgemäße Katalysator liegt nach der Herstellung vorzugsweise als Pulver, Granulat, Extrudat oder als Formkörper vor, beispielsweise als beschichteter Wabenkörper.

Im Folgenden wird die chemische Zusammensetzung der erfindungsgemäßen Katalysatoren dargelegt. Die Gewichtsangaben in % beziehen sich jeweils auf die Elementmassen des Palladiums, des Zinns, der Promotoren und der Dotiersubstanz. Für die Trägeroxide sowie die Zeolithe beziehen sich die Gewichtsangaben auf die jeweiligen oxidischen Verbindungen.

Typische Palladium-Mengen des erfindungsgemäßen Katalysators liegen bei 1,06 g/L - 2,1 g/L (30 - 60 g/ft$^3$), können jedoch je nach Anwendungsfall von diesen Mengen abweichen. Die Einheiten "g/L" bzw. "g/ft$^3$" beziehen sich, wie dem Fachmann vertraut, bei geträgerten Katalysatoren auf die elementare Masse Edelmetall in Relation zum Trägervolumen, z.B. zum Volumen eines Honigwaben-Trägerkörpers.

Der Katalysator zeichnet sich durch die im folgenden aufgeführten Mengenverhältnissen von Trägeroxid, Zeolith, Palladium, Promotoren und Dotiersubstanzen aus. Dabei werden die Massen des Zeolithen und des Trägeroxids auf ihre oxidische Form und die Massen des Palladiums, der Promotoren und der Dotiersubstanz auf die elementare Form bezogen.

Die Gesamtmenge an Zinn beträgt 3 - 50 Gew.-% (berechnet als Element) bezogen auf das Trägeroxid, wobei eine Gesamtmenge von 5 - 30 Gew.-% bevorzugt ist.

Die Gesamtmenge an Palladium (berechnet als Element) bezogen auf das Trägeroxid beträgt vorzugsweise 0,2 — 10 Gew.-%. Stärker bevorzugt ist eine Gesamtmenge von 0,4 — 5 Gew.-% .

Das Gewichtsverhältnis von Zinn zu Palladium (berechnet als Elemente) liegt vorzugsweise in einem Bereich von 2 : 1 bis 50 : 1, wobei ein Gewichtsverhältnis in einem Bereich von 4 : 1 bis 30 : 1 stärker bevorzugt ist.

Das Gewichtsverhältnis von Zinn zu Promotor (berechnet als Elemente) liegt vorzugsweise in einem Bereich von 100: 1 bis 0,1 : 1, wobei ein Gewichtsverhältnis in einem Bereich von 50 : 1 bis 0,5: 1 stärker bevorzugt ist. Noch stärker ist ein Gewichtsverhältnis in einem Bereich von 30 : 1 bis 1 : 1 bevorzugt.

Die Gesamtmenge an Zeolith bezogen auf das Trägeroxid (berechnet als Oxide) beträgt vorzugsweise 5 - 60 Gew.-%. Stärker bevorzugt ist eine Gesamtmenge an Zeolith in einem Bereich von 8 - 50 Gew.-%. Insbesondere bevorzugt ist ein Bereich von 10 - 40 Gew.-%.

Die Gesamtmenge an Dotiersubstanz (berechnet als Element) zu Zeolith (berechnet als Oxid) beträgt vorzugsweise 0,001 - 10 Gew.-%. Stärker bevorzugt ist eine Gesamtmenge an Dotiersubstanz von 0,1-8 Gew.-%. Insbesondere bevorzugt ist ein Bereich von 0,5 - 5 Gew.-%.

Die Erfindung betrifft auch die Verwendung des Katalysators zur Entfernung von Schadstoffen aus Abgasen von mageren Verbrennungsmotoren und Ablüften.

Weiterhin betrifft die vorliegende Erfindung auch ein Verfahren zur Abgasreinigung von mageren Verbrennungsmotoren und Ablüften unter Verwendung des vorstehend offenbarten Katalysators.

Vorzugsweise wird das Verfahren der Abgasreinigung derart durchgeführt, dass die Abgasreinigung das simultane Oxidieren von Kohlenwasserstoffen und Kohlenmonoxid sowie das Entfernen von Ruß durch Oxidation umfasst.

Der Katalysator kann auch in Kombination mit mindestens einem weiteren Katalysator oder Rußpartikel-Filter betrieben werden. Dabei kann z.B. der Rußpartikel-Filter mit dem Katalysator beschichtet werden.

Die Kombination des Katalysators mit einem weiteren Katalysator umfasst

(αα) eine sequentielle Anordnung der verschiedenen Katalysatoren,

(ββ) eine physikalische Mischung der verschiedenen Katalysatoren und Aufbringung auf einen gemeinsamen Formkörper oder

(γγ) eine Aufbringung der verschiedenen Katalysatoren in Form von Schichten auf einen gemeinsamen Formkörper,

sowie jede beliebige Kombination der Ausführungsformen (αα) bis (γγ).

In einer besonderen Ausführungsform ist der Rußpartikel-Filter selbst mit dem Oxidationskatalysator beschichtet.

Im Folgenden soll in Ausführungsbeispielen die Herstellung von beispielhaften Katalysatoren illustriert sowie deren Eigenschaften im Vergleich zum Stand der Technik dargestellt werden. Die Tatsache, dass dies an konkreten Beispielen unter der Angabe konkreter Zahlenwerte geschieht, soll in keinem Fall als Beschränkung der in der Beschreibung und den Ansprüchen gemachten Angaben verstanden werden.

In den Figuren zeigt/zeigen

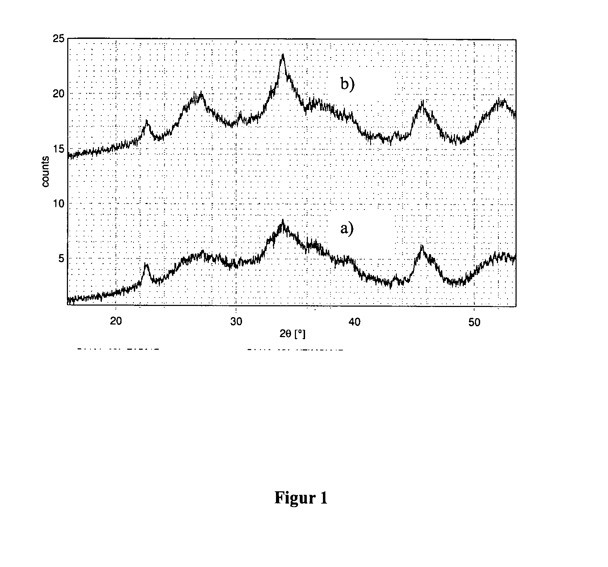

**Figur 1**  die Diffraktogramme der folgenden Proben: (a) **B03** (frisch) und b) **B03** (16 Stunden lang hydrothermal gealtert bei 850 °C ). Die horizontale Achse zeigt die 2-Theta-Skala in der Einheit Grad und die vertikale Achse die Intensität der Röntgenstrahlung in willkürlich gewählter Einheit. [Die röntgenographischen Untersuchungen der Proben wurden mit einem BRUKER AXS-Röngendiffraktometer (Fa. Bruker) durchgeführt, welches mit GADDS Flächendetektor ausgerüstet war. Die Aufnahmezeit pro Diffraktogramm betrug 100 min]

**Figur 2**  die CO-Konzentration als Funktion der Reaktionstemperatur an den Katalysatorproben nach den unterschiedlichen Alterungen a) B02 hydrothermal gealtert bei 850 °C; b) B05 thermisch gealtert bei 1050 °C; c) VB01-Referenz thermisch gealtert bei 950 °C.

**Figur 3**  die HC-Konzentration als Funktion der Reaktionstemperatur an den Katalysatorproben nach den unterschiedlichen Alterungen a) B02 hydrothermal gealtert bei 850 °C; b) B05 thermisch gealtert bei 1050 °C; c) VB01-Referenz thermisch gealtert bei 950 °C.

**Figur 4**  die HC-Konzentration als Funktion der Zeit an den Katalysatoren A) B10 thermisch gealtert bei 700 °C und B) VB01 thermisch gealtert bei 700 °C.

**Aktivitätsmessung der Katalysatoren**

Aktivitätsmessungen wurden in einer vollautomatischen Katalyse-Anlage mit 48 parallel betriebenen Festbett-Reaktoren aus Edelstahl (der Innendurchmesser eines Reaktors betrug 7 mm) durchgeführt. Die Katalysatoren wurden unter Dieselabgas-ähnlichen Bedingungen in einem kontinuierlichen Betrieb mit Sauerstoffüberschuss unter folgenden Bedingungen getestet:

| | |
|---|---|
| Temperaturbereich: | 120 - 400 °C |
| Abgaszusammensetzung: | 1500 vppm CO, 180 vppm $C_1$ (Oktan), 100 vppm $C_1$ (Propen), 100 vppm NO, 10 % $O_2$, 10 % $CO_2$, 5% $H_2O$, Rest - $N_2$. |
| GHSV: | 60 000 $h^{-1}$ |

Die Honigwaben-förmigen Katalysatoren wurden zermörsert und als Schüttgut für die Messungen verwendet.

Als Referenzkatalysator (VB) wurde ein kommerzieller, Honigwaben-förmiger Oxidationskatalysator für Abgase aus Dieselmotoren mit 3,1 g/L (90 g/ft$^3$) Platin eingesetzt, der ebenfalls zermörsert wurde und als Schüttgut für die Messungen verwendet wurde.

Die Vergleichsmessungen zwischen den erfindungsgemäßen Katalysatoren und dem Referenzkatalysator erfolgten auf Basis gleicher Katalysatorvolumina. Dabei wurde bei den erfindungsgemäßen Katalysatoren eine deutlich geringer Edelmetallmasse im Reaktor eingesetzt, da eine typische Edelmetallbeladung der erfindungsgemäßen Katalysatoren zwischen 30 und 60 g/ft$^3$ lag.

Die Bestimmung von CO und $CO_2$ erfolgte mit ND-IR-Analysatoren der Fa. ABB (Typ "Advance Optima"). Die Bestimmung des Kohlenwasserstoffs erfolgte mit einem FID der Fa. ABB (Typ "Advance Optima"). $O_2$ wurde mit einem λ-Sensor der Firma Etas bestimmt, während die Messung von NO, $NO_2$ und $NO_x$ mit einem UV-Gerät der ABB (Typ "Advance Optima") durchgeführt wurde.

Für die Bewertung der Katalysatoren wurden die $T_{50}$-Werte (Temperatur, bei der 50 % Umsatz erreicht wird) der CO- und HC-Oxidation als Beurteilungskriterium für die Oxidationsaktivität genutzt.

Die $T_{50}$-Werte für die Katalysatoren nach den unterschiedlichen Alterungen (thermische Alterung, hydrothermale Alterung, Schwefelalterung) sind in den Tabellen 2 und 3 zusammengefasst.

## Messung der Adsorption von Kohlenwasserstoffen

Die Messung des Speicherverhaltens der Katalysatoren für Kohlenwasserstoffe erfolgte mit der zuvor beschriebenen Testanlage unter Verwendung der ebenfalls zuvor geschilderten Gasmischung, wobei jedoch als Kohlenwasserstoff lediglich Oktan verwendet wurde. Bezüglich des Ablauf des Experiments wurde zunächst eine Reaktortemperatur von 110 °C eingeregelt und der zu messende Katalysator in einem Strom aus synthetischer Luft vorkonditioniert. Zu einem vordefinierten Zeitpunkt wurde dann der zu messende Katalysator mit der Oktan enthaltenden Gasmischung beaufschlagt. Die HC-Konzentration wurde als Funktion der Zeit erfasst.

## Schwefelalterung

Der Begriff" Schwefelalterung (auch Schwefeltoleranz oder Schwefelresistenz)" beschreibt die Fähigkeit eines Oxidationskatalysators, das im Abgas enthaltene CO und HC auch nach dem Einfluß von Schwefeloxiden ($SO_x$) zu $CO_2$ und $H_2O$ zu oxidieren.

Die Schwefelalterung wurde in einem 48-fachen Parallelreaktor unter folgenden Bedingungen durchgeführt:

| | |
|---|---|
| Temperatur: | 350 °C |
| Dauer: | 24 Stunden |
| Gaszusammensetzung: | 150 vppm $SO_2$, 5 % $H_2O$, Rest- synthetische Luft. |
| Raumgeschwindigkeit: | 13000 h$^{-1}$ |

Nach der 24-stündigen Alterung wurde die $SO_2$-Dosierung beendet und die Katalysatoren unter synthetischer Luft abgekühlt.

## Thermische Alterung

Die thermische Alterung der Katalysatoren erfolgte in einem Muffelofen bei einer Temperatur von 700, 950 oder 1050 °C in Luft. Die Katalysatoren wurden dabei 10 Stunden lang bei dieser Temperatur gehalten und dann auf Raumtemperatur abgekühlt.

## Hydrothermale Alterung

Die hydrothermale Alterung erfolgte in einem Muffelofen bei einer Temperatur von 850 °C in einem Luftstrom, der 10 % Wasser enthielt. Die Katalysatoren wurden dabei 16 Stunden lang bei dieser Temperatur gehalten und dann auf Raumtemperatur abgekühlt.

## Beispiele

### Beispiel B01

Zum Herstellen des Katalysators B01 wurde eine mechanische Mischung aus 80 Gew.-% Alumina (Puralox SCFa 140) der Fa. Sasol und 20 Gew.-% Beta-Zeolith (Zeocat PB/H) der Fa. Zeochem in deionisiertem Wasser suspendiert und in einer Mühle (Dyno-Mill Typ Multi Lab) der Fa. Willy A. Bachofen gemahlen. Die dabei entstandene Beschichtungssuspension hatte 20 Gew.-% Feststoffanteil. Diese Beschichtungssuspension zeigte sehr gute Hafteigenschaften und wurde ohne Zusatz weiterer Binder zum Herstellen des Washcoats eingesetzt.

Als Katalysatorträger wurde ein wabenförmiger Bohrkern aus Cordierit mit 400 cpsi (channels per square inch) der Fa. NGK verwendet, der zuvor auf eine Dimension von 1 Zoll Durchmesser und 2 Zoll Länge zugeschnitten wurde.

Der Bohrkern wurde durch mehrfaches Eintauchen in die Beschichtungssuspension mit dem Alumina/Zeolith-Washcoat beschichtet, wobei nach jedem Tauchschritt die Kanäle des Bohrkerns ausgeblasen wurden, um überschüssige Suspension zu entfernen. Nach jedem Beschichtungsschritt wurde der Bohrkern im Luftstrom getrocknet und abschließend 15 Minuten lang im Luftstrom bei 500 °C kalziniert. Die Washcoat-Beladung betrug 120 g/L. Diese Beladung stellt den auf den Formkörper aufgebrachten Feststoffanteils des Washcoats nach Kalzinierung dar.

Das Aufbringen des Zinns, des Palladiums und der Dotiersubstanz auf den mit Washcoat beschichteten Bohrkern erfolgte im mehreren Schritten.

Im ersten Schritt wurde der Washcoat-haltige Bohrkern mit einer wässrigen Lösung, die Zinn-Oxalat, Eisen-Nitrat und Salpetersäure enthielt, imprägniert. Dazu wurden 4,1 ml einer wässrigen, Salpetersäure-haltigen, 1,0 molaren Zinn-Oxalat Lösung mit 0,11 ml einer 1,0 molaren Eisen-Nitrat-Lösung vermischt und mit 0,9 ml Wasser verdünnt. Die resultierte Lösung wurde auf den beschichteten Bohrkern durch Tauchung aufgebracht. Der so imprägnierte Bohrkern wurde dann im Luftstrom getrocknet und 15 Minuten lang bei 500 °C im Luftstrom kalziniert.

Im nächsten Schritt erfolgte das Aufbringen der Goldverbindung. Diesbezüglich wurde der Bohrkern mit 5 ml einer wässrigen, $2,6 \times 10^{-4}$ molaren $HAuCl_4$-Lösung imprägniert. Anschließend wurde der Bohrkern im Luftstrom getrocknet.

Dann erfolgte die Imprägnierung mit einer Palladiumverbindung. Dazu wurde der Bohrkern mit 5 ml einer wässrigen, 0,08 molaren Palladium-Nitrat-Lösung imprägniert und im Luftstrom getrocknet.

Anschließend wurde der Katalysator 2 Stunden lang bei 500 °C im Muffelofen unter Luft kalziniert (als "frisch" bezeichnet).

Der fertige Katalysator enthielt 96 g/L Puralox SCFa 140, 24 g/L Zeocat PB/H, 19 g/L Zinn, 0,24 g/L Eisen, 0,01 g/L Gold, und 1,65 g/L Palladium.

Der fertige Katalysator wurde durch vorsichtiges Mörsern in Splittgut überführt.

Zwei Fraktionen des Splitguts wurden 10 Stunden bei 950 °C und 1050 °C in Luft kalziniert (als "thermisch gealtert" bezeichnet).

Eine weitere Fraktion des Splitguts wurde 16 Stunden lang bei 850 °C in Luft, die 10 Vol.-% Wasser enthielt, kalziniert (als "hydrothermal gealtert" bezeichnet).

**Beispiele B02 bis B03**

Die Katalysatoren wurden analog zu Beispiel B01 hergestellt, wobei für den Washcoat eine mechanische Mischung aus Silica-Alumina (Siralox 5/170) der Fa. Sasol und Zeocat PB/H der Fa. Zeochem verwendet wurde, und die Beladungen des Washcoats mit Zinn, Palladium und Gold variiert wurden. Weiterhin wurde kein Eisen eingesetzt.

In Tabelle 1 sind die Zusammensetzungen der Katalysatoren gemäß Beispiel **B02** bis **B03** auf Gewichtsbasis in der Einheit g/L wiedergegeben, wobei sich diese Angaben auf die oxidische Form des Trägeroxids und des Zeolithen und auf die elementare Form der des Palladiums, Zinns und des Goldes beziehen.

**Beispiele B04 bis B05**

Die Katalysatoren wurden analog zu Beispiel BO1 hergestellt, wobei für den Washcoat eine mechanische Mischung aus Silica-Alumina (Siralox 5/170) der Fa. Sasol und Zeocat PB/H der Fa. Zeochem verwendet wurde, und die Beladungen des Washcoats mit Zinn, Palladium, Eisen und Gold variiert wurden. Weiterhin enthielten die Katalysatoren zusätzlich die Promotoren Gallium (B04) oder Indium (B05). Die Gallium- und Indiumverbindungen wurden in Form ihrer Nitrate der salpetersauren Zinn-Oxalat/Eisen-Nitrat-Imprägnierlösung zugegeben.

In Tabelle 1 sind die Zusammensetzungen der Katalysatoren gemäß Beispiel **B05** bis **B05** auf Gewichtsbasis in der Einheit g/L wiedergegeben, wobei sich diese Angaben auf die oxidische Form des Trägeroxids und des Zeolithen und auf die elementare Form der des Palladiums, Zinns, der Dotiersubstanz und Promotoren beziehen.

**Beispiele B06 und B07**

Die Katalysatoren wurden analog zu Beispiel B01 hergestellt, wobei die Beladungen der Katalysatorkomponenten variiert wurden und Silber (B06) oder Indium (B07) als weitere Promotoren bzw. Dotiersubstanz verwendet wurden. Die Silber- und Indiumverbindungen wurden in Form ihrer Nitrate der salpetersauren Zinn-Oxalat/Eisen-Nitrat-Imprägnierlösung zugegeben.

In Tabelle 1 sind die Zusammensetzungen der Katalysatoren gemäß Beispiel **B06** und **B07** auf Gewichtsbasis in der Einheit g/L wiedergegeben, wobei sich diese Angaben auf die oxidische Form des Trägeroxids und des Zeolithen und auf die elementare Form des Palladiums, Zinns, der Dotiersubstanz und Promotoren beziehen.

**Beispiel B08**

Der Katalysator gemäß dieses Beispiels ist in Form einer Doppelschicht strukturiert.

Zum Herstellen der ersten Schicht des Katalysators wurde ein Alumina (Puralox SCFa 140) der Fa. Sasol in deionisiertem Wasser suspendiert und in einer Mühle (Dyno-Mill Typ Multi Lab) der Fa. Willy A. Bachofen gemahlen. Die dabei entstandene Beschichtungssuspension hatte 20 Gew.-% Feststoffanteil. Diese Beschichtungssuspension zeigte sehr gute Hafteigenschaften und wurde ohne Zusatz weiterer Binder zum Herstellen der ersten Schicht des Washcoats eingesetzt.

Als Katalysatorträger wurde ein wabenförmiger Bohrkern aus Cordierit mit 400 cpsi (channels per square inch) der Fa. NGK verwendet, der zuvor auf einen Dimension von 1 Zoll Durchmesser und 2 Zoll Länge zugeschnitten wurde.

Der Bohrkern wurde durch mehrfaches Eintauchen in die Beschichtungssuspension mit dem Alumina-Washcoat beschichtet, wobei nach jedem Tauchschritt die Kanäle des Bohrkerns ausgeblasen wurden, um überschüssige Suspension zu entfernen. Nach jedem Beschichtungsschritt wurde der Bohrkern im Luftstrom getrocknet und abschließend 15 Minuten lang im Luftstrom bei 500 °C kalziniert. Die Washcoat-Beladung betrug 124 g/L. Diese Beladung stellt den auf den Formkörper aufgebrachten Feststoffanteils des Washcoats nach Kalzinierung dar.

Anschließend wurden die Verbindungen des Palladiums, Zinns und Galliums auf den beschichteten Bohrkern aufimprägniert. Dazu wurden 4,3 ml einer wässrigen, Salpetersäure-haltigen, 1,0 molaren Zinn-Oxalat Lösung mit 0,89 ml einer 1,0 molaren Gallium-Nitrat-Lösung und 0,26 ml einer 1,0 molaren Pd-Nitrat-Lösung vermischt und mit 0,5 ml Wasser verdünnt. Die resultierte Lösung wurde auf den beschichteten Bohrkern durch Tauchung aufgebracht. Der so imprägnierte Bohrkern wurde dann im Luftstrom getrocknet und 15 Minuten lang bei 500 °C im Luftstrom kalziniert.

Die erste Schicht des Katalysator enthielt 124 g/L Puralox SCFa, 20 g/L Zinn, 2,4 g/L Gallium und 1,07 g/L Palladium.

Zum Herstellen der zweiten Schicht des Katalysators wurde ein Zeolith (Zeocat PB/H) der Fa. Zeochem in deionisiertem Wasser suspendiert und in einer Mühle (Dyno-Mill Typ Multi Lab) der Fa. Willy A. Bachofen gemahlen. Die Beschichtungssuspension hatte 20 Gew.-% Feststoffanteil. In 100 ml dieser Suspension wurden 1,2 ml einer wässrigen 0,1 molaren $HAuCl_4$-Lösung zugegeben und 15 Minuten lang gerührt. Danach wurden 13,2 ml einer wässrigen 0,1 molaren Palladium-Nitrat-Lösung zugeben und weiter 15 Minuten lang gerührt. Zur Verbesserung der Hafteigenschaften der des Zeolith-haltigen Washcoats wurde in die Gold-Palladium-haltige Zeolith-Suspension 1,8 ml einer kolloidalen $SiO_2$- Suspension (Ludox TMA, 34% $SiO_2$) der Fa. DuPont zugegeben.

Der Bohrkern mit der ersten Schicht wurde durch wiederholtes Eintauchen in die Gold- und Palladium-haltige Zeolith-Suspension mit der zweiten Schicht beschichtet. Nach jedem Tauchschritt wurden die Kanäle des Bohrkerns freigeblasen, um überschüssige Zeolith-Suspension zu entfernen, und eine Trocknung im Luftstrom durchgeführt. Die Beschichtung wurde im Luftstrom getrocknet und anschließend 15 Minuten lang im Luftstrom bei 500 °C kalziniert. Die Beladung der zweiten Schicht betrug 52 g/L. Diese Beladung stellt den auf den Formkörper aufgebrachten Feststoffanteils des Zeolith-haltigen Washcoats nach Kalzinierung dar.

Die zweite Schicht des Katalysator enthielt 50 g/L Zeocat PB/H, 0.06 g/L Gold und 0.35 g/L Palladium.

Anschließend wurde der Katalysator 2 Stunden lang bei 500 °C im Muffelofen in Luft kalziniert (als "frisch" bezeichnet).

Der fertige Katalysator wurde durch vorsichtiges Mörsern in Splittgut überführt.

Zwei Fraktionen des Splittguts wurden zusätzlich 10 Stunden lang jeweils bei 950 °C und 1050 °C in Luft kalziniert (als "thermisch gealtert" bezeichnet).

Eine weitere Fraktion des Splittguts wurde 16 Stunden lang bei 850 °C in Luft, die 10 Vol.-% Wasser enthielt, kalziniert (als "hydrothermal gealtert" bezeichnet).

**Beispiel B09**

Der Katalysator B09 wurde analog zu Beispiel B08 hergestellt, wobei die Beladung und die Zusammensetzung der zweiten Schicht variiert wurde.

Die zweite Schicht des Katalysators enthielt 25 g/L Zeocat PB/H, 0,01 g/L Gold und 0.09 g/L Palladium.

In Tabelle 1 ist die Zusammensetzungen des Katalysatoren gemäß Beispiel **B09** Gewichtsbasis in der Einheit g/L wiedergegeben, wobei sich diese Angaben auf die oxidische Form des Trägeroxids und des Zeolithen und auf die elementare Form der Edelmetalle und der Promotoren beziehen.

**Beispiel 10**

Der Katalysator gemäß dieses Beispiels ist in Form einer Doppelschicht strukturiert.

Zum Herstellen der ersten Schicht des Katalysators wurde ein Alumina (Puralox SCFa 140) der Fa. Sasol im deionisiertem Wasser suspendiert und in einer Mühle (Dyno-Mill Typ Multi Lab) der Fa. Willy A. Bachofen gemahlen.

Die dabei entstandene Beschichtungssuspension hatte 20 Gew.-% Feststoffanteil. Diese Beschichtungssuspension zeigte sehr gute Hafteigenschaften und wurde ohne Zusatz weiterer Binder zum Herstellen der ersten Schicht des Washcoats eingesetzt.

Als Katalysatorträger wurde ein wabenförmiger Bohrkern aus Cordierit mit 400 cpsi (channels per square inch) der Fa. NGK verwendet, der zuvor auf einen Dimension von 1 Zoll Durchmesser und 2 Zoll Länge zugeschnitten wurde.

Der Bohrkern wurde durch mehrfaches Eintauchen in die Beschichtungssuspension mit dem Alumina-Washcoat beschichtet, wobei nach jedem Tauchschritt die Kanäle des Bohrkerns ausgeblasen wurden, um überschüssige Suspension zu entfernen. Nach jedem Beschichtungsschritt wurde der Bohrkern im Luftstrom getrocknet und anschließend 15 Minuten lang im Luftstrom bei 500 °C kalziniert. Die Washcoat-Beladung betrug 108 g/L. Diese Beladung stellt den auf den Formkörper aufgebrachten Feststoffanteils des Washcoats nach Kalzinierung dar.

Das Aufbringen der Verbindungen des Palladiums, Zinns und Galliums auf den beschichteten Bohrkern erfolgte in einem Schritt. Dazu wurden zunächst 4,3 ml einer wässrigen, Salpetersäure-haltigen, 1,0 molaren Zinn-Oxalat Lösung mit 0,89 ml einer 1,0 molaren Gallium-Nitrat-Lösung und 0,30 ml einer 1,0 molaren Pd-Nitrat-Lösung vermischt und mit 0,5 ml Wasser verdünnt. Anschließend wurde der Bohrkern in die Abmischung der Verbindungen eingetaucht. Der so imprägnierte Bohrkern wurde dann im Luftstrom getrocknet und 15 Minuten lang bei 500 °C im Luftstrom kalziniert. Anschließend wurde der Bohrkern im Luftstrom getrocknet und 15 Minuten lang bei 500 °C im Luftstrom kalziniert.

Die erste Schicht des Katalysators enthielt 108 g/L Puralox SCFa, 20 g/L Zinn, 2,4 g/L Gallium und 1,24 g/L Palladium.

Zum Herstellen der zweiten Schicht des Katalysators wurde ein Zeolith (Zeocat PB/H) der Fa. Zeochem in deionisiertem Wasser suspendiert und in einer Mühle (Dyno-Mill Typ Multi Lab) der Fa. Willy A. Bachofen gemahlen. Die dabei entstandene Beschichtungssuspension hatte 20 Gew.-% Feststoffanteil. In 100 ml dieser Suspension wurden 9 ml einer wässrigen 0,2 molaren Eisen-Nitrat-Lösung zugegeben und 15 Minuten lang gerührt. Danach wurden 13,2 ml einer wässrigen 0,1 molaren Palladium-Nitrat-Lösung zugegeben und weiter 15 Minuten lang gerührt. Zur Verbesserung der Hafteigenschaften wurden in die Eisen- Palladium-haltige Zeolith-Suspension 1,8 ml einer kolloidalen $SiO_2$-Suspensio (Ludox TMA, 34% $SiO_2$) der Fa. DuPont zugegeben.

Der Bohrkern wurde dann durch wiederholtes Eintauchen in die Eisen- und Palladium-haltige Zeolith-Suspension mit der zweiten Schicht beschichtet. Nach jedem Tauchschritt wurden die Kanäle des Bohrkerns freigeblasen, um überschüssige Zeolith-Suspension zu entfernen, und eine Trocknung im Luftstrom durchgeführt. Die Beschichtung wurde anschließend 15 Minuten lang im Luftstrom bei 500 °C kalziniert. Die Beladung mit der zweiten Schicht betrug 50 g/L. Diese Beladung stellt den auf den Formkörper aufgebrachten Feststoffanteils des Zeolith-haltigen Washcoats nach Kalzinierung dar.

Die zweite Schicht des Katalysator enthielt 50 g/L Zeocat PB/H, 0.25 g/L Eisen und 0.35 g/L Palladium.

Anschließend wurde der Katalysator 2 Stunden lang bei 500 °C im Muffelofen unter Luft kalziniert (als "frisch" bezeichnet).

Der fertige Katalysator wurde durch vorsichtiges Mörsern in Splittgut überführt.

Drei Fraktionen des Splittguts wurden zusätzlich 10 Stunden jeweils bei 950 °C und 1050°C in Luft kalziniert (als "thermisch gealtert" bezeichnet).

Eine weitere Fraktion des Splittguts wurde 16 Stunden lang bei 850 °C in Luft, die 10 Vol.-% Wasser enthielt, kalziniert (als "hydrothermal gealtert" bezeichnet).

**Beispiele B11 bis 12**

Die Katalysatoren der Beispiele B11 und B 12 wurden entsprechend Beispiel 10 hergestellt, jedoch wurden anstelle der Dotiersubstanz Eisen die Dotiersubstanzen Gallium und Indium eingesetzt.

**Vergleichsbeispiel 1 (VB1)**

Zum Vergleich wurde ein kommerzieller Oxidationskatalysator auf Platinbasis mit einem Platingehalt von 3,1g/L (90 g/ft³) ("Referenzkatalysator") eingesetzt.

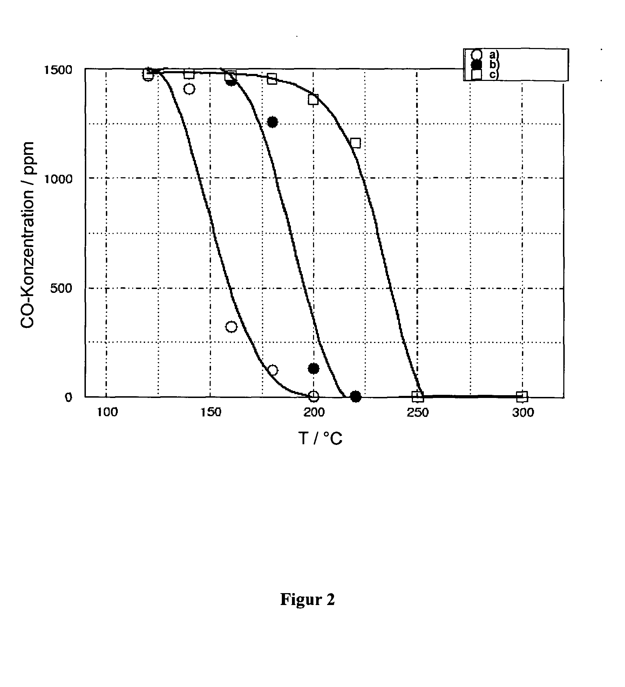

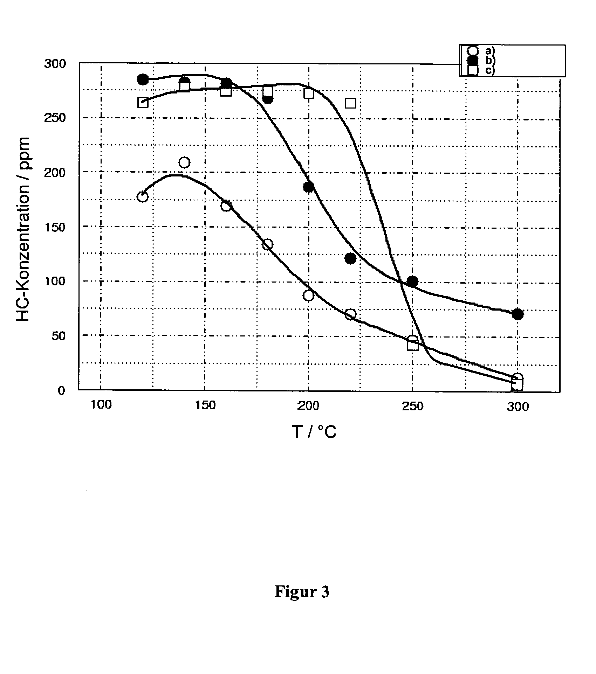

Die "Light-off" Werte der Tabellen 2 und 3 sowie die Figuren 2 und 3 zeigen, dass die erfindungsgemäßen Katalysatoren nach thermischer und hydrothermaler Alterung eine besser Aktivität sowohl für die Oxidation von CO als auch für die Oxidation von HC besitzen.

Tabelle 4 gibt einen Überblick der in den Katalysatoren gemessenen Schwefelkonzentrationen einiger erfindungsgemäßer Katalysatoren und dem Vergleichsbeispiel VB01. Die erfindungsgemäßen Katalysatoren nehmen nur eine geringe Menge Schwefel auf und zeigen daher deutlich verbesserte Schwefeltoleranz.

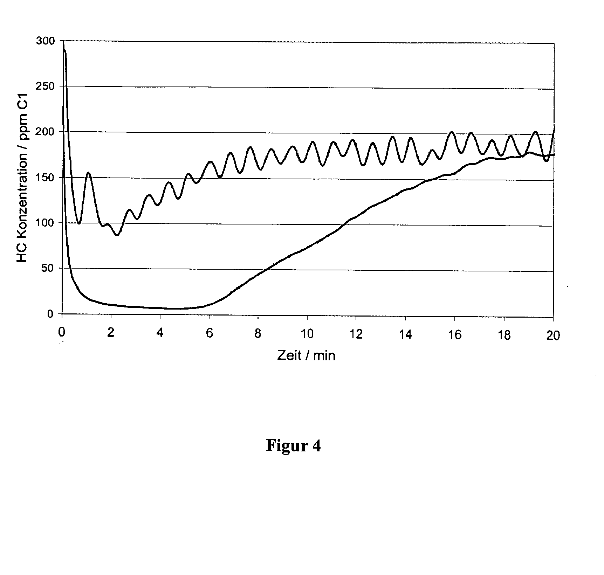

Figur 4 zeigt, dass die erfindungsgemäßen Katalysatoren eine deutlich höhere Effizienz für die Adsorption von Oktan besitzen als der Platinkatalysator gemäss VB01. So adsorbiert der Katalysator nach Beispiel B10 das Oktan während der ersten 5 Minuten des Experiments annähernd vollständig (Kurve A), während der Vergleichskatalysator VB01 nur für einen kurzen Zeitraum maximal die Hälfte des eindosierten Oktans aufnimmt (Kurve B).

**Tabelle 1:** Zusammensetzung der Katalysatoren gemäß der Beispiele B01 bis B 12.

| Beispiel | Trägeroxid, Zeolith, Palladium, Zinn, Promotoren und Dotiersubstanz [g/L] | | | | | | | | | |
|---|---|---|---|---|---|---|---|---|---|---|
| | Puralox SCFa 140 | Siralox 5/170 | Zeocat PB/H | Pd | Sn | Ga | In | Fe | Au | Ag |
| B01 | 96 | - | 24 | 1,65 | 19 | - | - | 0,24 | 0,01 | - |
| B02 | - | 120 | 30 | 1,8 | 7,5 | - | - | - | 0,08 | - |
| B03 | - | 120 | 30 | 1,8 | 24 | - | - | - | 0,08 | - |
| B04 | - | 90 | 40 | 2,0 | 13 | 1,3 | - | 0,65 | 0,07 | - |
| B05 | - | 90 | 40 | 2,0 | 13 | - | 1,3 | 0,65 | 0.07 | - |
| B06 | 105 | - | 45 | 1,59 | 25 | - | - | 0,11 | 0,06 | 0,75 |
| B07 | 105 | - | 45 | 0,75 | 25 | - | 1,5 | 0,11 | 0,02 | - |
| B08 | 124 | - | 50 | 1,42 | 20 | 2,4 | - | - | 0,06 | - |
| B09 | 124 | - | 25 | 1,16 | 20 | 2,4 | - | - | 0,01 | - |
| B10 | 108 | - | 50 | 1,59 | 20 | 2,4 | - | 0,25 | - | - |
| B11 | 107 | - | 50 | 1,59 | 20 | 0,25 | - | - | - | - |
| B12 | 109 | - | 50 | 1,59 | 20 | - | 0,25 | - | - | - |

**Tabelle 2:** Ergebnisse der katalytischen Tests der CO-Oxidation an den Katalysatoren nach den unterschiedlichen Alterungen

| Beispiel | T$_{50}$ (CO) [°C] | | | |
|---|---|---|---|---|
| | hydrothermal gealtert bei 850°C | thermisch gealtert bei 950 °C | thermisch gealtert bei 1050 °C | hydrothermal gealtert bei 850 °C und verschwefelt |
| BO1 | 164 | 192 | 196 | 185 |
| B02 | 153 | 191 | - | 185 |
| B03 | 157 | 180 | - | 191 |
| B04 | 192 | 180 | 191 | 207 |
| B05 | - | 183 | 192 | 186 |
| B06 | 183 | 186 | 207 | 213 |
| B07 | 185 | 196 | 193 | 219 |
| B08 | 165 | 171 | 199 | 212 |
| B09 | 170 | 171 | - | 210 |
| B10 | 171 | 191 | 212 | 188 |
| B11 | 169 | 187 | - | 194 |
| B12 | 180 | 189 | - | 198 |
| VB01 | 207 | 230 | 235 | 215 |

**Tabelle 3:** Ergebnisse der katalytischen Tests der HC-Oxidation an den Katalysatoren nach den unterschiedlichen Alterungen

| Beispiel | $T_{50}$ (HC) [°C] | | | |
|---|---|---|---|---|
| | hydrothermal gealtert bei 850 °C | thermisch gealtert bei 950 °C | thermisch gealtert bei 1050 °C | hydrothermal gealtert bei 850 °C und verschwefelt |
| B01 | 192 | 204 | 213 | 207 |
| B02 | 182 | 217 | - | 201 |
| B03 | 189 | 207 | - | 207 |
| B04 | 208 | 196 | 217 | 219 |
| B05 | - | 201 | 219 | 213 |
| B06 | 213 | 237 | 207 | 222 |
| B07 | 217 | 228 | 231 | 225 |
| B08 | 201 | 213 | 211 | 217 |
| B09 | 201 | 213 | - | 219 |
| B10 | 195 | 212 | 233 | 225 |
| B11 | 183 | 201 | - | 208 |
| B12 | 194 | 218 | - | 205 |
| VB01 | 220 | 237 | 260 | 228 |

**Tabelle 4:** Ergebnisse der XRF-Analyse der Schwefel-Konzentration in den Katalysatoren nach $SO_2$-Alterung

| Beispiel | Katalysatorzustand vor $SO_2$-Alterung | S-Konzentration nach $SO_2$ Alterung [Gew.-%] |
|---|---|---|
| B01 | frisch | 0,9 |
| B10 | frisch | 1,3 |
| B10 | hydrothermal gealtert bei 850 °C | 0,7 |
| B10 | thermisch gealtert bei 950 °C | 0,3 |
| VB01 | hydrothermal gealtert bei 850 °C | 8,2 |

**Patentansprüche**

1. Katalysator, **dadurch gekennzeichnet, dass** er

   (i) eine Zusammensetzung umfassend Palladium, Zinnoxid und ein Trägeroxid,
   (ii) einen Zeolith und
   (iii) eine Dotiersubstanz, mit der der Zeolith (ii) dotiert ist,

   enthält.

2. Katalysator nach Anspruch 1, **dadurch gekennzeichnet, dass** die Dotiersubstanz ausgewählt ist aus der Gruppe der Elemente bestehend aus Indium, Gallium, Zinn, Eisen, Seltenerdelemente, Palladium, Platin, Gold und Silber und Verbindungen dieser Elemente.

3. Katalysator nach Anspruch 1 oder 2, **dadurch gekennzeichnet, dass** die Zusammensetzung (i) einen Promotor enthält.

**4.** Katalysator nach Anspruch 3, **dadurch gekennzeichnet, dass** der Promotor ausgewählt ist aus der Gruppe der Elemente bestehend aus Alkalimetalle, Erdalkalimetalle, Seltenerdelemente, Indium, Gallium, Eisen, Platin, Gold und Silber und Verbindungen dieser Elemente.

**5.** Katalysator nach einem der vorstehenden Ansprüche, **dadurch gekennzeichnet, dass** das Trägeroxid Silizium oder Aluminium enthält.

**6.** Katalysator nach einem der vorstehenden Ansprüche, **dadurch gekennzeichnet, dass** der Zeolith ausgewählt ist aus der Gruppe Y-Zeolith, DAY-Zeolith, USY-Zeolith, ZSM-5, ZSM-11, ZSM-20, Silikalit, Ferrierit, Mordenit und β-Zeolith.

**7.** Katalysator nach einem der vorstehenden Ansprüche, **dadurch gekennzeichnet, dass** das Zinnoxid und Palladium in einer röntgenographisch amorphen oder einer nanopartikulären Form auf dem Trägeroxid vorliegen.

**8.** Katalysator nach einem der vorstehenden Ansprüche, **dadurch gekennzeichnet, dass** der Katalysator als beschichteter Formkörper vorliegt, wobei auf dem Formkörper eine Schicht aus dem Trägeroxid der Zusammensetzung (i) aufgebracht ist und auf besagter Schicht eine Schicht aufgebracht ist, die den Zeolith (ii) enthält, der mit der Dotiersubstanz (iii) dotiert ist.

**9.** Katalysator nach einem der vorstehenden Ansprüche, **dadurch gekennzeichnet, dass** die Gesamtmenge an Dotiersubstanz (berechnet als Element) zu Zeolith (berechnet als Oxid) 0,001 - 10 Gew.-% beträgt.

**10.** Verfahren zur Herstellung eines Katalysators nach einem der Ansprüche 1 bis 9, **dadurch gekennzeichnet, dass** das Verfahren die Stufen (j) oder (jj) umfasst:

(j) Inkontaktbringen einer Zinnverbindung, einer Palladiumverbindung, eines Trägeroxids und gegebenenfalls eines Promotors mit einem Zeolith und einer Dotiersubstanz,
(jj) Inkontaktbringen einer Zinnverbindung, einer Palladiumverbindung, eines Trägeroxids und gegebenenfalls eines Promotors mit einem Zeolith, der mit einer Dotiersubstanz dotiert ist.

**11.** Verwendung eines Katalysators nach einem der Ansprüche 1 bis 9 oder eines Katalysators hergestellt nach Anspruch 10 zur Entfernung von Schadstoffen aus mageren Verbrennungsmotoren und Ablüften.

**12.** Verfahren zur Entfernung von Schadstoffen aus Abgasen von mageren Verbrennungsmotoren unter Verwendung eines Katalysators nach einem der Ansprüche 1 bis 9 oder eines Katalysators hergestellt nach Anspruch 10, **dadurch gekennzeichnet, dass** es das Oxidieren von Kohlenmonoxid und Kohlenwasserstoffen sowie das gleichzeitige Entfernen von Rußpartikeln durch Oxidation umfasst.

**Figur 1**

**Figur 2**

Figur 3

**Figur 4**

**Europäisches**
**Patentamt**

**EUROPÄISCHER RECHERCHENBERICHT**

**Nummer der Anmeldung**

EP 05 01 0515

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | US 4 252 687 A (DALE ET AL) 24. Februar 1981 (1981-02-24) * Spalte 5, Zeilen 62-64 * * Beispiel 4 * * Spalte 7, Zeilen 15-18 * * Ansprüche 1,7-9,12 * ----- | 1,2,5,10 | B01J23/62 B01J29/06 B01D53/94 |
| X | US 4 317 460 A (DALE ET AL) 2. März 1982 (1982-03-02) * Spalte 2, Zeilen 10,11 * * Beispiele 4,6 * ----- | 1,2,5,10 | |
| X | US 6 677 264 B1 (KLEIN HARALD ET AL) 13. Januar 2004 (2004-01-13) * Spalte 1, Zeilen 6-11,16-18,58-60; Ansprüche 1,3,4,7 * * Spalte 2, Zeilen 13-24 * * Spalte 5, Zeilen 14-21 * * Spalte 7, letzte Zeile * * Spalte 8, Zeilen 45-49 * * Beispiele * ----- | 1-12 | |
| | | | **RECHERCHIERTE SACHGEBIETE (Int.Cl.7)** |
| X | EP 0 432 534 A (DEGUSSA AG) 19. Juni 1991 (1991-06-19) * Ansprüche 1-3,5 * * Beispiele 12,21 * * Seite 1, Zeilen 37-42 * * Seite 2, Zeile 52 - Seite 3, Zeile 16 * * Seite 3, Zeilen 45-49 * * Seite 4, Zeilen 5-13,26,27,32 * ----- -/-- | 1-3,5,6, 9-12 | B01J B01D |

Der vorliegende Recherchenbericht wurde für alle Patentansprüche erstellt

| Recherchenort | Abschlußdatum der Recherche | Prüfer |
|---|---|---|
| München | 12. Oktober 2005 | Jourdan, A |

KATEGORIE DER GENANNTEN DOKUMENTE

X : von besonderer Bedeutung allein betrachtet
Y : von besonderer Bedeutung in Verbindung mit einer
   anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
   nach dem Anmeldedatum veröffentlicht worden ist
D : in der Anmeldung angeführtes Dokument
L : aus anderen Gründen angeführtes Dokument
........................................................................
& : Mitglied der gleichen Patentfamilie, übereinstimmendes
   Dokument

EPO FORM 1503 03.82 (P04C03)

**Europäisches Patentamt**

**EUROPÄISCHER RECHERCHENBERICHT**

Nummer der Anmeldung

EP 05 01 0515

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| Y | US 6 399 035 B1 (TABATA MITSUNORI ET AL) 4. Juni 2002 (2002-06-04) <br> * Spalte 1, Zeilen 11-18 * <br> * Spalte 2, Zeilen 17-23 * <br> * Spalte 2, Zeile 57 - Spalte 3, Zeile 16 * <br> * Spalte 3, Zeilen 34-36 * <br> * Spalte 4, Zeilen 11-33 * <br> * Spalte 5, Zeilen 41-53 * <br> * Spalte 5, Zeile 66 - Spalte 6, Zeile 12 * <br> * Spalte 6, Zeilen 34-38 * <br> * Spalte 7, Zeilen 42-50 * <br> * Spalte 9, Zeilen 6-12 * <br> * Beispiele 1,410,13,15,17,19 * <br> * Ansprüche 1,2 * <br> ----- | 1-6,9-12 | |
| Y | US 6 274 107 B1 (YAVUZ BULENT O ET AL) 14. August 2001 (2001-08-14) <br> * Ansprüche 1,2,9,11,12,21-27 * <br> * Spalte 1, Zeilen 15-19 * <br> * Spalte 4, Zeilen 57-66 * <br> * Beispiele 2,3 * <br> ----- | 1-6,9-12 | RECHERCHIERTE SACHGEBIETE (Int.Cl.7) |
| A | EP 0 886 041 A (NGK INSULATORS, LTD) 23. Dezember 1998 (1998-12-23) <br> * das ganze Dokument * <br> ----- | 1-12 | |
| A | US 2004/192546 A1 (DANG ZHONGYUAN ET AL) 30. September 2004 (2004-09-30) <br> * das ganze Dokument * <br> ----- | 1-12 | |

Der vorliegende Recherchenbericht wurde für alle Patentansprüche erstellt

| Recherchenort | Abschlußdatum der Recherche | Prüfer |
|---|---|---|
| München | 12. Oktober 2005 | Jourdan, A |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**　　　EP 05 01 0515

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

12-10-2005

| Im Recherchenbericht angeführtes Patentdokument | | Datum der Veröffentlichung | Mitglied(er) der Patentfamilie | | Datum der Veröffentlichung |
|---|---|---|---|---|---|
| US 4252687 | A | 24-02-1981 | BE | 873598 A1 | 19-07-1979 |
| | | | BE | 873599 A1 | 19-07-1979 |
| | | | CA | 1130264 A1 | 24-08-1982 |
| | | | DE | 2902119 A1 | 26-07-1979 |
| | | | FR | 2414956 A1 | 17-08-1979 |
| | | | GB | 1604081 A | 02-12-1981 |
| | | | JP | 54110188 A | 29-08-1979 |
| | | | NL | 7900486 A | 24-07-1979 |
| | | | NL | 7900487 A | 24-07-1979 |
| US 4317460 | A | 02-03-1982 | BE | 873600 A1 | 19-07-1979 |
| | | | CA | 1137958 A1 | 21-12-1982 |
| | | | DE | 2902120 A1 | 26-07-1979 |
| | | | FR | 2414882 A1 | 17-08-1979 |
| | | | FR | 2440912 A1 | 06-06-1980 |
| | | | JP | 54110400 A | 29-08-1979 |
| | | | NL | 7900488 A | 24-07-1979 |
| US 6677264 | B1 | 13-01-2004 | DE | 19854794 A1 | 31-05-2000 |
| | | | EP | 1004347 A2 | 31-05-2000 |
| | | | JP | 2000157870 A | 13-06-2000 |
| EP 0432534 | A | 19-06-1991 | AR | 247116 A1 | 30-11-1994 |
| | | | AU | 629433 B2 | 01-10-1992 |
| | | | AU | 6769990 A | 13-06-1991 |
| | | | BR | 9006184 A | 24-09-1991 |
| | | | CA | 2031762 A1 | 10-06-1991 |
| | | | CN | 1052262 A | 19-06-1991 |
| | | | DE | 3940758 A1 | 13-06-1991 |
| | | | ES | 2023787 T3 | 01-07-1994 |
| | | | JP | 3224631 A | 03-10-1991 |
| | | | JP | 3297432 B2 | 02-07-2002 |
| | | | KR | 165111 B1 | 15-12-1998 |
| | | | MX | 173116 B | 01-02-1994 |
| | | | RU | 2022643 C1 | 15-11-1994 |
| | | | TR | 25872 A | 01-09-1993 |
| | | | US | 5157007 A | 20-10-1992 |
| | | | ZA | 9009271 A | 25-09-1991 |
| US 6399035 | B1 | 04-06-2002 | KEINE | | |
| US 6274107 | B1 | 14-08-2001 | US | 5804155 A | 08-09-1998 |
| EP 0886041 | A | 23-12-1998 | CA | 2240691 A1 | 16-12-1998 |
| | | | JP | 11005020 A | 12-01-1999 |
| | | | US | 2001002988 A1 | 07-06-2001 |

EPO FORM P0461

Für nähere Einzelheiten zu diesem Anhang : siehe Amtsblatt des Europäischen Patentamts, Nr.12/82

# EP 1 721 665 A1

**ANHANG ZUM EUROPÄISCHEN RECHERCHENBERICHT
ÜBER DIE EUROPÄISCHE PATENTANMELDUNG NR.**

EP 05 01 0515

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

12-10-2005

| Im Recherchenbericht angeführtes Patentdokument | Datum der Veröffentlichung | Mitglied(er) der Patentfamilie | Datum der Veröffentlichung |
|---|---|---|---|
| US 2004192546 A1 | 30-09-2004 | WO 2004087311 A1 | 14-10-2004 |

Für nähere Einzelheiten zu diesem Anhang : siehe Amtsblatt des Europäischen Patentamts, Nr.12/82

27

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1129764 A1
- US 6132694 A
- EP 835684 A
- US 6516611 B
- EP 0781592 B1
- WO 0226379 A1
- US 6516611 B1
- EP 0800856 A
- EP 525761 B1
- EP 0957064 B1

**In der Beschreibung aufgeführte Nicht-Patentliteratur**

- **GRIGORIUS C. KOLTSAKIS ; ANASTASIOS M. STAMATELOS.** Prog. Energy Combust. Sci. Elsevier Science Ltd, 1997, vol. 23, 1-39